# EUROPÄISCHE PATENTSCHRIFT

(11) **EP 4 088 852 B1**
(45) Veröffentlichungstag und Bekanntmachung des Hinweises auf die Patenterteilung: **23.09.2026**
(21) Anmeldenummer: 21000134.3
(22) Anmeldetag: 12.05.2021
(51) Int. Cl.: B23K 9/095, B23K 9/12, B23K 9/127

(54) **VERFAHREN ZUR DETEKTION VON STELLEN EINER FÜGELINIE ZWISCHEN BAUTEILEN**
METHOD FOR DETECTING POINTS OF A JOINT BETWEEN COMPONENTS
PROCÉDÉ DE DÉTECTION DES EMPLACEMENTS D'UNE LIGNE DE JOINT ENTRE DES COMPOSANTS

(43) Veröffentlichungstag der Anmeldung: 16.11.2022
(73) Patentinhaber: SKS Welding Systems GmbH, 67661 Kaiserslautern (DE)
(72) Erfinder: KLEIN, Thomas, 67688 Rodenbach (DE)
(74) Vertreter: Mooser, Sebastian Thomas

(56) Entgegenhaltungen:
- DE-A1- 102019 127 385
- DE-A1- 2 847 169
- DE-U1- 29 816 729
- JP-A- H0 252 170

## Beschreibung

Die Erfindung betrifft ein Verfahren zum Bestimmen einer Fügelinie als Grundlage für einen relativen Verfahrweg zwischen einem Lichtbogenschweißbrenner einer Lichtbogenschweißanlage und zumindest zwei Werkstücken, als Schweißweg, welcher vorzugsweise durch einen Mehrachsenroboter ausgeführt wird, und welcher nach zumindest einem Detektionsverfahrschritt mit dem Lichtbogenschweißbrenner ausgeführt wird, um zwischen den zumindest zwei Werkstücken entlang der Fügelinie eine Schweißnaht zu erzeugen, wobei der zur nachfolgenden Ausführung des Lichtbogenschweißvorgangs vorgesehene und vom Mehrachsenroboter geführte Lichtbogenschweißbrenner in dem zumindest einen Detektionsverfahrschritt automatisiert über zumindest eines der Werkstücke nicht-parallel zur Fügelinie geführt wird, um Informationen zum Ist-Verlauf der Fügelinie zu ermitteln.

Es existieren eine Vielzahl von unterschiedlichen Schweißverfahren. Die vorliegende Erfindung hat besondere Bedeutung für das Lichtbogenschweißen. Dieses basiert auf einer Hitzeentwicklung eines elektrischen Lichtbogens zwischen einer Schweißelektrode und einem Werkstück, an dem eine Schweißung vorgenommen werden soll. Durch die Hitzeentwicklung kann der bzw. können die zu schweißenden Werkstoffe lokal aufgeschmolzen werden. Bei nahezu sämtlichen Lichtbogenschweißverfahren wird dem Bereich des Lichtbogens hierzu ein Schutzgas zugeführt, um einerseits eine widerstandssenkende ionisierte Atmosphäre zwischen der Schweißelektrode und dem Werkstück zu ermöglichen und um andererseits eine Oxidation der Schweißelektrode und des Werkstücks zu verhindern. Anstelle eines hierbei als Schutzgas vorgesehenen Inertgases kann auch ein Aktivgas oder eine Mischform aus beiden zugeführt werden, das zur Reaktion dient. Ebenso können Elektroden vorgesehen sein, die keine externe Gaszuführung benötigen, da die hierfür erforderlichen Substanzen in den Elektroden integriert sind und beim Abschmelzen der Elektroden freigesetzt werden.

Ein Lichtbogen-Schweißbrenner ist üblicherweise derart ausgelegt, daß ein Benutzer oder ein Roboter einen Metallschweißdraht, der auch als Metallzusatzwerkstoff bezeichnet werden kann, auf eine spezifizierte Fügestelle auf dem Zielmetallstück richten kann. Der Schweißdraht wird durch den Schweißbrenner geführt und schließlich durch eine Öffnung in der Kontaktdüse am Ende des Schweißbrenners zum Zielmetallstück transportiert.

Bei Anlegen einer elektrischen Spannung am Schweißbrennerinnenrohr und beim Kontaktieren des Schweißdrahtes mit dem Zielmetallstück, fließt ein hoher elektrischer Strom von einem Schweißbrennerinnenrohr über einen sogenannten Düsenstock, dann über die Kontaktdüse, über den Schweißdraht und gegebenenfalls einem Lichtbogen zum Zielmetallstück und dann zur Masse. Der hohe Strom und der Lichtbogen verursachen das Schmelzen des Schweißdrahtes in einer Schutzgasatmosphäre, was zur Tropfenbildung des Drahtes und zum Entstehen eines Lichtbogens führt.

Dieser Lichtbogen schmilzt das Metall der Zielmetallstücke und den nachgeführten Schweißdraht. Durch Abfallen der entstandenen Tropfen des Schweißdrahtes oder durch Übergabe des Tropfens im Kurzschluss auf die verflüssigte Stelle der Zielmetallstücke sowie deren nachfolgendes Abkühlen werden diese miteinander verbunden.

Die Erfindung richtet sich zudem vor allem an automatisierte Lichtbogenschweißprozesse, bei denen mittels eines im dreidimensionalen Raum beweglichen Mehrachsenroboters der Lichtbogenschweißbrenner geführt wird, um einen üblicherweise vorbestimmten Schweißweg entlang einer Fügelinie abzufahren und hierbei eine Schweißnaht zu erzeugen. Im Zusammenhang mit der Erfindung kann sowohl beim zumindest einen Detektionsverfahrschritt als auch bei der nachfolgenden Erzeugung der Schweißnaht die erforderliche relative Bewegung zwischen dem Roboter und dem zumindest einen Werkstück sowohl vom Roboter als auch vom Werkstück, oder durch jeweils Teilbewegungen von beiden ausgeführt werden. In den meisten Fällen wird die Schweißnaht zwischen zwei Werkstücken erzeugt und der Schweißbrenner entlang aneinanderstoßenden Kanten der beiden Werkstücke geführt. Hierbei besteht die Schwierigkeit, daß trotz Werkstückspannvorrichtungen sich Ungenauigkeiten in Bezug auf den vorbestimmten Weg des Schweißbrenners und der dazu relativen Anordnung der Werkstücke ergeben können, wie auch durch Werkstücktoleranzen. Da der Mehrachsenroboter mit dem Lichtbogenschweißbrenner einen vorprogrammierten Schweißweg abfährt, können derartige Ungenauigkeiten Einfluß auf die Qualität der erzeugten Schweißnähte haben. Es wird deshalb bei automatisierten Schweißprozessen stets priorisiert angestrebt derartige Ungenauigkeiten oder Abweichungen zu vermeiden, damit der Schweißbrenner möglichst exakt im Bereich des Stoßes bzw der tatsächlich vorhandenen Fügelinie zwischen den beiden Werkstücken geführt werden kann.

WO2019/002141 A1 offenbart ein Verfahren, bei dem der Schweißbrenner mit der Schweißdrahtspitze hämmernd über die beiden aneinanderstoßenden und miteinander zu verbindenden Werkstücke geführt wird, wobei der Verfahrweg senkrecht zum Sollverlauf der vorgesehenen Schweißnaht verläuft. Zur Steigerung der Messgenauigkeit soll der gleiche Meßweg zumindest abschnittsweise mehrfach abgefahren werden. An diesem Verfahren kann als nachteilig empfunden werden, daß zur Erzielung einer höheren Meßgenauigkeit der Verfahrweg mehrmals zumindest abschnittsweise abgefahren werden muß, was zusätzliche Zeit in Anspruch nimmt, in welcher die Schweißanlage nicht produktiv ist. Zudem kann befürchtet werden, daß die hämmernde Bewegung der Schweißdrahtspitze auf ein Werkstück einer hohen Genauigkeit des Verfahrens hinderlich sein könnte.

Die DE 28 47 169 A1 (offenbarend den Oberbegriff des Anspruchs 1) zeigt eine automatisierte Schweißmaschine mit einer in einer Elektrodenführung gehaltenen Schweißelektrode und einer Halterung zum Fixieren eines Werkstücks. Eine Relativposition zwischen Schweißelektrode und Werkstückhalterung wird so gesteuert, dass die Elektrodenspitze einer Schweißlinie an dem Werkstück folgt und ein automatischer Schweißvorgang durchgeführt werden kann. Durch einen Schalter lässt sich die Schweißelektrode selektiv auf eine Schweißstromquelle oder eine Abtast-Stromquelle umschatten, und ein zwischen der Elektrode und dem Werkstück eingeschalteter Sensor misst einen Strom oder eine Spannung zwischen Elektrode und Werkstück, wenn die Elektrode an die Abtast-Stromquelle angeschlossen ist. Auf diese Weise wird in Abhängigkeit von dem Ausgang des Sensors die Relativposition zwischen Schweißelektrode und Werkstück abgetastet und so ein Schweißpunkt oder eine Schweißlinie festgestellt. Bei einer automatisierten Schweißmaschine mit Schweißdrahtnachführung im Verlauf des Schweißprozesses ist eine Klemmhülse zum Festklemmen der Elektrode in der Elektrodenführung vorhanden, mit der sich die Länge der aus der Elektrodenführung hervorstehenden Schweißelektrode bei der Betriebsart Abtasten festlegen lässt.

Die DE 298 16 729 U1 beschreibt einen Schweißbrenner mit einer Düse, in der ein Schweißdraht geführt ist. Der die Brenner-Düse durchlaufende Schweißdraht ist vorgeschoben und in einem definierten Abstand zur Brenner-Düse abgeschnitten worden. An den Schweißdraht ist über ein Relais der Pluspol einer Spannungsquelle angeschlossen, deren Minuspol mit dem Werkstück verbunden ist. Das Relais betätigt einen Schalter, der einen mit der Steuerung verbundenen Stromkreis schließt. Im Betrieb wird das Ende des Schweißdrahts in einem geringen Abstand von der Oberfläche des Werkstücks positioniert, so dass der Stromkreis noch nicht geschlossen ist. Der Schweißdraht kann jetzt in der horizontalen Suchrichtung über das Werkstück bewegt werden. Sobald der Schweißdraht den Absatz des Werkstücks erreicht und berührt, ist der Stromkreis geschlossen, und das Relais betätigt den Schalter. Die dann erreichte Position wird in die Steuerung eingelesen und mit der ursprünglichen Position verglichen.

Die DE 10 2019 127385 A1 beschreibt ein Verfahren zum Kompensieren einer Verschiebung einer Lernposition, wobei das Verfahren beinhaltet: Erzeugen eines Kompensierungsstartpunkts und eines Kompensierungsendpunkts an Positionen, an denen jede aus einer Vielzahl von Lernpositionen zwischen dem Kompensierungsstartpunkt und dem Kompensierungsendpunkt in einer Richtung eingeschlossen sind, die den Schweißpfad kreuzt, wobei die Vielzahl von Lernpositionen entlang des Schweißpfads eines zu schweißenden Ausgangsmaterials eingestellt wird; Erfassen eines Profils des zu schweißenden Ausgangsmaterials entlang eines Erfassungspfads, indem eine Berührungswahrnehmung ausgeführt wird, während ein Schweißbrenner entlang des Erfassungspfads von dem erzeugten Kompensierungsstartpunkt zu dem erzeugten Kompensierungsendpunkt bewegt wird, wobei ein Schweißdraht aus dem Schweißbrenner vorspringend ausgegeben wird; und Kompensieren jeder Lernposition aufgrund des erfassten Profils.

Die JP H02 52170 A beschreibt ein Verfahren zur Verbesserung der Erkennungsgenauigkeit der Schweißstartposition durch Erkennen eines stromführenden Zustands, Bewegen eines Schweißbrenners zur Zielposition und anschließendes Hochziehen des Schweißbrenners um den vorgeschriebenen Abstand von der Zielposition, um die Schweißstartposition festzulegen.

Der Erfindung liegt deshalb die Aufgabe zugrunde, ein Verfahren zur Ermittlung von Informationen über einen IST-Verlauf der Fügelinie zur Bestimmung eines von einem Schweißroboter abzufahrenden Schweißwegs der eingangs genannten Art zu schaffen, das mit vergleichsweise geringem Aufwand eine hohe Genauigkeit erzielen kann.

Diese Aufgabe wird durch ein Verfahren der eingangs genannten Art erfindungsgemäß durch die Merkmale von Patentanspruch 1 gelöst. Hierbei kann vorgesehen sein, daß der Schweißbrenner mit seinem Schweißdraht im zumindest einen Detektionsverfahrschritt zunächst mit der Schweißdrahtspitze die Oberfläche des einen Werkstücks an einer Ausgangsstelle kontaktiert, danach von der Ausgangsstelle bis zur Fügelinie für die vorgesehenen Schweißnaht zumindest im wesentlichen nicht-parallel zu einem Soll-Verlauf der Fügelinie mit durchgehend gleichen Kontaktverhältnissen zwischen dem Schweißdraht und der Oberfläche des Werkstücks, von einem Mehrachsenroboter über die Oberfläche des Werkstücks geführt wird, um durch Detektion einer Änderung der Kontaktverhältnisse zwischen der Schweißdrahtspitze und dem zumindest einen Werkstück auf diesem Verfahrweg über die Oberfläche, sowie durch Auswertung des Detektionsergebnisses mittels einer Steuerung auf Koordinaten einer Stelle der Fügelinie zu schließen.

Der Erfindung liegt der Gedanke zugrunde, daß mit konstanten Kontaktverhältnissen des Schweißdrahts, insbesondere der Schweißdrahtspitze, mit einem Werkstück, welches zu den miteinander zu verbindenden Bauteilen gehört und über das der Schweißdraht geführt wird, der Übergang von dem einen zum anderen Bauteil besonders genau feststellbar ist. In vielen Fällen existiert beim Übergang vom einen zum anderen Bauteil ein Höhenunterschied oder ein Spalt, wodurch für zumindest kurze Zeit der zuvor ununterbrochen vorhandene Kontakt oder ununterbrochen nicht vorhandene Kontakt zwischen dem jeweiligen Bauteil und der Schweißdrahtspitze aufgehoben sein kann. Im Gegensatz zu einer alternierenden Auf- und Abbewegung des Schweißdrahts relativ zum Schweißbrenner während der Verfahrbewegung, wie dies aus dem Stand der Technik bekannt ist, ist beispielsweise bei einer konstant schleifenden Bewegung die Wahrscheinlichkeit deutlich höher, daß exakt beim Verlassen der Oberfläche des zumindest einen Werkstücks durch die bis dahin schleifend über die Oberfläche geführte Schweißdrahtspitze, auch dieser Vorgang des Verlassens der Oberfläche zeitlich unmittelbar und örtlich exakt detektiert werden kann. Beispielsweise diese eintretende Kontaktänderung kann als Detektionsergebnis für die Erkennung einer Stelle der Fügelinie und/oder darauf basierend auch eine Stelle der nachfolgend zu erzeugenden Schweißnaht und damit auch einer Stelle, über welche der Schweißbrenner bei der Schweißnahterzeugung mit seiner Schweißdrahtspitze zu führen ist, dienen.

In einer bevorzugten Ausführungsform der Erfindung kann deshalb vorgesehen sein, daß der Schweißdraht im zumindest einen Detektionsverfahrschritt nach dem Kontakt der Schweißdrahtspitze mit der Oberfläche von der Ausgangsstelle bis zur Fügelinie zumindest im wesentlichen konstant und mit ununterbrochen vorhandenem Kontakt zwischen dem Schweißdraht und der Oberfläche des Werkstücks zumindest im wesentlichen nicht-parallel zu einem Soll-Verlauf der Fügelinie geführt wird, um durch eine aufgrund eines Kontaktverlusts des Schweißdrahts mit dem zumindest einen Werkstück eintretende Änderung der Kontaktverhältnisse auf Koordinaten der Stelle des Ist-Verlaufs der Fügelinie zu schließen.

In einer dazu alternativen bevorzugten Ausführungsform der Erfindung kann vorgesehen sein, daß der Schweißdraht im zumindest einen Detektionsverfahrschritt nach dem Kontakt der Schweißdrahtspitze mit der Oberfläche an der Ausgangsstelle des einen Werkstücks von der Oberfläche abgehoben wird, dann mit Abstand, insbesondere mit geringem Abstand, zur Oberfläche des Werkstücks bis zur Fügelinie zumindest im wesentlichen konstant mit ununterbrochen nicht vorhandenem Kontakt zwischen dem Schweißdraht und der Oberfläche des Werkstücks zumindest im wesentlichen nicht-parallel zu einem Soll-Verlauf der Fügelinie geführt wird, um durch eine aufgrund eines eintretenden Kontakts der Schweißdrahtspitze mit einem der Werkstücke auf Koordinaten der Stelle des Ist-Verlaufs der Fügelinie zu schließen. Bei dieser bevorzugten Ausführungsform der Erfindung können die während des Verfahrwegs eingehaltenen konstanten Kontaktverhältnisse somit in einem nicht vorhandenen Kontakt des Schweißdrahts mit dem Werkstück bestehen. Die zu detektierende Kontaktänderung ist somit ein eintretender Kontakt der Schweißdrahtspitze mit einem der Werkstücke, insbesondere mit dem zweiten Werkstück. Dieses bevorzugte Ausführungsbeispiel der Erfindung eignet sich insbesondere für die Detektion von Fügelinien für zu erzeugende Nähten, die durch zwei zueinander senkrecht ausgebildeten Flächen gebildet werden und bei denen sich der Schweißdraht mit seiner Schweißdrahtspitze voraus und über die Oberfläche des einen Werkstücks geführt, der Kehlnaht nähert, um dann mit der Schweißdrahtspitze im Bereich der Fügelinie auf die Oberfläche des anderen Werkstücks anzustoßen. Diese bevorzugte Ausführungsform der Erfindung eignet sich auch für andere Konstellationen von Fügelinien, insbesondere für solche, bei denen die Werkstücke im Bereich der Fügelinie einen Höhenversatz aufweisen.

In einer weiteren bevorzugten Ausführungsform der Erfindung kann vorgesehen sein, daß der Schweißdraht bei der Ausführung des Verfahrwegs über die Oberfläche des zumindest einen Werkstücks, in unveränderter relativer Position zum Lichtbogenschweißbrenner verbleibt. Es können hierbei bevorzugte Ausführungsformen vorgesehen sein, bei denen der Schweißdraht diese relative Position zum Schweißbrenner auch bei einer eintretenden Kontaktänderung zur Oberfläche einhält. Bei anderen bevorzugten Ausführungsformen der Erfindung, kann bei einer Kontaktänderung auch eine relative Positionsänderung zwischen der Schweißdrahtspitze und dem Schweißbrenner eintreten. Durch Beibehaltung der relativen Position der Schweißdrahtspitze bezogen auf den Schweißbrenner können auf technisch besonders einfache Weise gleichbleibende Kontaktverhältnisse zwischen der Schweißdrahtspitze und der Oberfläche des zumindest einen Werkstücks sichergestellt werden. Letztere können im wesentlichen durch die gesteuerte Bewegung des Roboters und gegebenenfalls durch eine für die jeweils angestrebten konstant einzuhaltenden Kontaktverhältnisse geeignete Einstellung der Drahtvorschubeinrichtung erreicht werden.

Im Zusammenhang mit der Erfindung kann es vorteilhaft sein, daß der Schweißdraht zumindest bei Eintreffen auf die Fügelinie zwischen Antriebsrollen der Drahtvorschubeinrichtung geklemmt ist. Mit Vorteil kann der Schweißdraht während des gesamten zumindest einen Detektionsverfahrschritts zwischen den Antriebsrollen der Drahtvorschubeinrichtung ununterbrochen geklemmt sein. Der Schweißdraht sollte hierdurch bei seiner Bewegung mit konstantem Kontakt oder Nicht-Kontakt über die Oberfläche des zumindest einen Werkstücks keine Relativbewegung zum TCP ausführen.

Im Zusammenhang mit einem Schweißdraht existieren unterschiedliche und mehrere Möglichkeiten die Kontaktänderung zu detektieren. Eine besonders bevorzugte Möglichkeit kann darin bestehen, daß am Schweißdraht während der Ausführung des zumindest einen Detektionsverfahrschritts eine Spannung anliegt und als Detektionsereignis aufgrund einer Kontaktänderung entweder die Entstehung eines Kurzschlusses oder die Aufhebung eines bestehenden Kurzschlusses genutzt wird. Die Entstehung eines Kurzschlusses oder dessen Aufhebung setzt bei dem erfindungsgemäß auf die Oberfläche des jeweiligen Werkstücks ausgerichteten Schweißdraht die zu erkennende Kontaktänderung der Schweißdrahtspitze mit dem Werkstück voraus. Auf diese Weise können im Zusammenhang mit zuvor ununterbrochen konstant vorgesehenen Kontaktverhältnisse detektierte Kontaktänderungen in Echtzeit detektiert werden. Das Detektionsergebnis der damit festgestellten Koordinaten einer Stelle der Fügelinie kann damit auch bei nur einem einmaligen Abfahren des entsprechenden Verfahrwegs besonders genau sein.

In einem von mehreren bevorzugten erfindungsgemäßen Ausführungsbeispielen kann beispielsweise beim Führen der Schweißdrahtspitze über die Oberfläche eines ersten Werkstücks mit ständigem Kontakt des Schweißdrahts mit dieser Werkstückoberfläche an den Schweißdraht eine Spannung angelegt sein, die zu einem Kurzschluß zwischen dem Schweißdraht und dem Werkstück führt. Der Kurzschluß kann durch Messung von elektrischen Parametern, wie Strom, Spannung und/oder Widerstand auch in Echtzeit, festgestellt werden. Erreicht der Schweißdraht dann eine Fuge, Spalt oder einen Absatz am Übergang vom ersten zum zweiten Werkstück, dann verliert der Schweißdraht die zuvor bestehenden Kontaktverhältnisse zum ersten Werkstück. Bei beispielsweise einer zuvor schleifenden Bewegung der Drahtspitze über die Oberfläche, kann der Schweißdraht bei Erreichen der Fügelinie den Kontakt zur Oberfläche verlieren, wodurch der zuvor bestehende Kurzschluß aufgehoben ist. Dieses Ereignis des aufgehobenen elektrischen Kurzschlusses kann wiederum elektrisch detektiert werden. Die Steuerung sollte somit die räumlichen Koordinaten, beispielsweise X-Y-Z-Koordinaten, der Stelle abspeichern, an welcher die Aufhebung des elektrischen Kurzschlusses auftrat. Durch den bereits erörterten zumindest zweiten Verfahrweg kann vorzugsweise auf gleicher Weise, nämlich Detektierung der Aufhebung des elektrischen Kurzschlusses, eine zweite Stelle der Fuge, Spalt oder des Absatzes am Übergang vom ersten zum zweiten Werkstück detektiert werden. Auch hier sollte die Steuerung die räumlichen Koordinaten der Stelle abspeichern, an welcher die Aufhebung des elektrischen Kurzschlusses stattfindet. Bei einem geradlinigen Verlauf der zu erzeugenden Schweißnaht kann mit den beiden ermittelten Koordinaten der Ist-Verlauf des Schweißweges des Schweißbrenners ermittelt bzw. der Soll-Verlauf entsprechend korrigiert und nachfolgend ausgeführt werden.

In einer weiteren bevorzugten Ausführungsform der Erfindung können Verfahrwege für Verfahrdetektionsverfahrschritte in einer bestimmten Weise verlaufen beziehungsweise ausgerichtet sein. Dabei kann der Verfahrweg, nach einem ersten Kontakt der Schweißdrahtspitze mit der Oberfläche, hin zur Fügelinie ausgerichtet sein. Der Verfahrweg verläuft also über jene Oberfläche des Werkstücks, mit der unmittelbar zuvor ein Erstkontakt der Schweißdrahtspitze stattgefunden hat. Vorzugsweise kann hierbei die Ausrichtung des jeweiligen Verfahrwegs zumindest in etwa senkrecht zum SOLL-Verlauf der Fügelinie ausgerichtet sein. Diese Ausrichtung kann auch bei nichtlinearem Verlauf der Fügekante vorgesehen und von Vorteil sein. Schließlich kann es auch von Vorteil sein, für die Strecke des Verfahrswegs, entlang der eine Detektion einer Kontaktänderung stattfindet, einen stetigen Verlauf dieses Teils des Verfahrwegs vorzusehen. Der Verfahrweg und die Ausrichtung des Schweißdrahts sollte vorzugsweise stets derart vorgenommen sein, daß eine Kontaktänderung zwischen der Schweißdrahtspitze und dem jeweiligen Werkstück und nicht mit einem anderen Teil des Schweißdrahts stattfindet. Der zur Detektion genutzte Verfahrweg kann enden, sobald die Kontaktänderung festgestellt worden ist.

In einer bevorzugten Ausführungsform der Erfindung erfolgt in einem zweiten Detektionsverfahrschritt ein Verfahrvorgang von zumindest einem zweiten Verfahrweg über das zumindest eine Werkstück, der sich vom ersten abgefahren Weg unterscheidet. Auch der Verfahrweg des zumindest zweiten Detektionsverfahrschritts sollte mit konstant gleichen Kontaktverhältnissen der Schweißdrahtspitze mit der Oberfläche des jeweiligen Werkstücks durchgeführt werden. Auch dieser Verfahrweg sollte auf eine, jedoch eine andere als beim ersten Abfahrvorgang, Soll-Stelle der zu erzeugenden Schweißnaht gerichtet sein. Auch beim zweiten Verfahrweg wird die Schweißdrahtspitze am Übergang vom einen Werkstück zum anderen Werkstück, ein abweichendes Verhalten - bezogen auf das Verhalten beim Überführen über die Fläche des Werkstücks - zeigen. Dieses abweichende Verhalten kann wiederum in gleicher Weise als Detektionsereignis genutzt werden, um eine weitere Stelle des Ist-Verlaufs der Fügelinie für die zu erzeugenden Schweißnaht zu ermitteln. Mittels zwei Ist-Stellen des Verlaufs der Fügelinie kann zumindest bei einem geradlinigen Verlauf der zu erzeugenden Naht deren Ist-Verlauf bestimmt werden. Gleiches gilt für einen geradlinigen Verlauf eines Abschnitts einer zu erzeugenden Naht, auch dessen Soll-Verlauf kann mit zumindest zwei mit Abstand zueinander angeordnete detektierte Stellen der Fügelinie bestimmt werden. Hierbei gilt, je weiter die beiden Stellen voneinander beabstandet sind, desto genauer lässt sich der Ist-Verlauf der zu erzeugenden Naht bestimmen. Im Zusammenhang mit der Erfindung ist es bevorzugt, wenn jeder der Verfahrwege von Detektionsverfahrschritten nur einmal abgefahren wird, was zu einer besonders schnellen Ermittlung des IST-Verlaufs der Fügelinie führt. Auch wenn dies bevorzugt ist, so gehören aber auch Ausführungsformen zur Erfindung, bei denen zumindest einer der Verfahrwege von Detektionsverfahrschritten mehrfach, beispielsweise zweifach, abgefahren wird.

In einer weiteren bevorzugten Ausführungsform der Erfindung kann vorgesehen sein, daß beim Abfahren des zumindest einen Ermittlungswegs ein Motor einer Drahtvorschubeinrichtung der Lichtbogenschweißanlage auf den Schweißdraht Druck, insbesondere ununterbrochen Druck, in Vorschubbewegungsrichtung ausübt, durch welchen der Schweißdraht gegen das jeweilige Werkstück gedrückt wird. Hierdurch kann ein sicherer Kontakt der Schweißdrahtspitze mit der Oberfläche der jeweiligen Werkstücke erzielt werden. Außerdem kann hiermit die Funktionssicherheit und Genauigkeit der Detektierung der gesuchten Stelle des Absatzes, der Fuge, des Spalts oder Stosses, an welchem die Schweißnaht erzeugt werden soll, gesteigert und Fehlmessungen verhindert werden.

In einer bevorzugten Ausführungsform der Erfindung kann vorgesehen sein, daß der Schweißdraht mit seiner aus dem Lichtbogenschweißbrenner herausstehenden Schweißdrahtspitze bei seiner Verfahrbewegung über die Oberfläche eines Werkstücks mittels des Lichtbogenschweißbrenners gegen die Oberfläche des Werkstücks gedrückt wird. Insbesondere in Kombination mit der erfindungsgemäß bevorzugten Neigung des freien Schweißdrahtendes kann hierdurch zumindest eine geringe federelastische Andruckkraft erzeugt werden, mit welcher die Schweißdrahtspitze sicher auf der Oberfläche eines Werkstücks gehalten werden kann.

Auch im Zusammenhang mit dieser Ausführungsform der Erfindung können in vorteilhafter Weise weitere Detektionsverfahrschritte, zumindest jedoch ein weiterer Detektionsverfahrschritte, abgefahren werden. Hierbei wird, ebenfalls bevorzugt, das gleiche Verfahren wie bei der Ausführung des ersten Detektionsverfahrschritt angewendet. Grundsätzlich ist es aber auch möglich, für weitere Detektionsverfahrschritte unterschiedliche Detektionsprinzipien zu verwenden und miteinander zu kombinieren. Der Verfahrweg des zumindest einen weiteren Detektionsverfahrschritts ist vorzugsweise nicht identisch mit dem Verfahrweg des ersten oder einem anderen bereits ausgeführten Detektionsverfahrschritts. Der Verfahrweg des zumindest eine weiteren Detektionsverfahrschritts sollte den Sollverlauf der Fügelinie mit Abstand zur Schnittstelle des Verfahrwegs des ersten Detektionsverfahrschritts schneiden, damit zumindest ein zweiter Vergleichs- und gegebenenfalls Korrekturwert mit bzw für den Sollverlauf zur Verfügung steht. Auch beim zumindest einen weiteren Detektionsverfahrschritt kann somit eine Änderung der elektrischen Parameter eines Kurzschlußes der Schweißdrahtspitze mit dem Werkstück als Detektion der Stelle verwendet werden, an welcher ein Übergang vom einen zum anderen Werkstück stattfindet.

Zur Steigerung der Genauigkeit des erfindungsgemäßen Verfahrens kann dieses in bevorzugter Weise einen Teach-In Schritt umfassen, mit dem vor der Ausführung eines Detektionsverfahrschritts ein Kalibrieren bzw Referenzieren der Schweißdrahtspitze stattfindet. Hierzu kann beispielsweise mit dem Lichtbogenschweißbrenner und der Schweißdrahtspitze eine vorbestimmte Stelle einer Referenzfläche angefahren werden, von der die Robotersteuerung ausgeht, daß die Referenzfläche in Bezug auf den Schweißbrenner im TCP befindet. Die Position der Referenzfläche relativ zum Schweißroboter und Schweißbrenner ist somit bekannt. Um die Schweißdrahtspitze nun in den Tool Center Point (TCP) zu bringen, ist es lediglich erforderlich, die Schweißdrahtspitze so weit aus dem Schweißbrenner heraus zu verfahren, bis die Schweißdrahtspitze mit der Referenzfläche in Kontakt kommt. Ein solcher Kontakt kann beispielsweise mittels einer Kurzschlußerkennung festgestellt werden. Die Schweißdrahtspitze befindet sich nun für die nachfolgenden Vorgänge im TCP.

Ein Referenzieren bzw Kalibrieren kann in einer weiteren bevorzugten Ausführungsform der Erfindung ein Kürzen des aus dem Lichtbogenschweißbrenner herausragenden Schweißdrahtendes umfassen. Eine solche Kürzung kann unter anderem deshalb vorteilhaft sein, weil die Drahtspitze durch zuvor erfolgte Schweißprozesse eine undefinierte Form und eine undefinierte relative Position zum Schweißbrenner aufweisen kann. Zum Kürzen kann ein Kürzungswerkzeug vorgesehen sein, das sich relativ zum Schweißbrenner an einer Referenzstelle, insbesondere einem Tool-Center-Point (TCP) befindet. Durch Kürzen des Schweißdrahts mittels des Kürzungswerkzeugs, wie beispielsweise einer automatisiert betätigten Drahtschere, die sich an dieser Referenzstelle befindet, wird eine neue Drahtspitze geschaffen, die sich dann ebenfalls exakt an der Referenzstelle befindet. Wird diese Position der neu geschaffenen Schweißdrahtspitze als Referenz für den nachfolgend ausgeführten zumindest einen Detektionsverfahrvorgangs genutzt, kann eine besonders hohe Genauigkeit der ermittelten Koordinaten der Übergangsstellen zwischen den zumindest zwei Werkstücke erreicht werden.

Es kann somit erfindungsgemäß bevorzugt sein, daß nach dem Kürzen des Schweißdrahts mehrere nicht-parallele Detektionswege mit der Drahtspitze entweder konstant schleifend oder konstant kontaktlos auf oder über dem zumindest einen Werkstück manuell gesteuert abgefahren und dabei bei Änderung der Kontaktverhältnisse die Koordinaten der hierbei von der Drahtspitze eingenommenen Position in der Robotersteuerung für ein nachfolgendes automatisiertes Abfahren der Detektionswege abgespeichert werden. Es kann alternativ ebenfalls bevorzugt sein, daß nach dem Kürzen des Schweißdrahts mehrere nicht-parallele Detektionswege mit der Drahtspitze konstant mit Abstand zur Oberfläche über die Oberfläche des zumindest einen Werkstücks manuell gesteuert abgefahren und dabei bei Änderung der Kontaktverhältnisse, hier ein eintretender Kontakt, die Koordinaten der von der Drahtspitze eingenommenen Position in der Robotersteuerung für ein nachfolgendes automatisiertes Abfahren der Detektionswege abgespeichert werden.

Es kann schließlich ebenfalls erfindungsgemäß bevorzugt sein, daß einer der zuvor beschriebenen Referenzier- oder Kalibriervorgänge auch unmittelbar vor der Ausführung von zumindest einem automatisch ausgeführten Detektierverfahrschritts ausgeführt wird. Es kann insbesondere von Vorteil sein, wenn in einer Serienproduktion vor der Schweißbearbeitung von jedem Bauteil aus der Serie, das jeweils aus den zumindest zwei aneinanderzufügenden Werkstücken besteht, jeweils ein Referenzierungs- bzw. Kalibrierungsvorgang durchgeführt wird und unter Verwendung der kalibrierten Schweißdrahtspitze die für das jeweilige Bauteil vorgesehenen Verfahrdetektionsschritte sowie Schweißvorgänge durchgeführt werden.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: eine perspektivische Darstellung einer bevorzugten Ausführungsform einer erfindungsgemäßen Lichtbogenschweißeinrichtung;
- Fig. 2: eine Detaildarstellung eines Lichtbogenschweißbrenner aus Fig. 1, mit Sicht auf einen in den Lichtbogenschweißbrenner integrierten Teil einer Drahtvorschubeinrichtung;

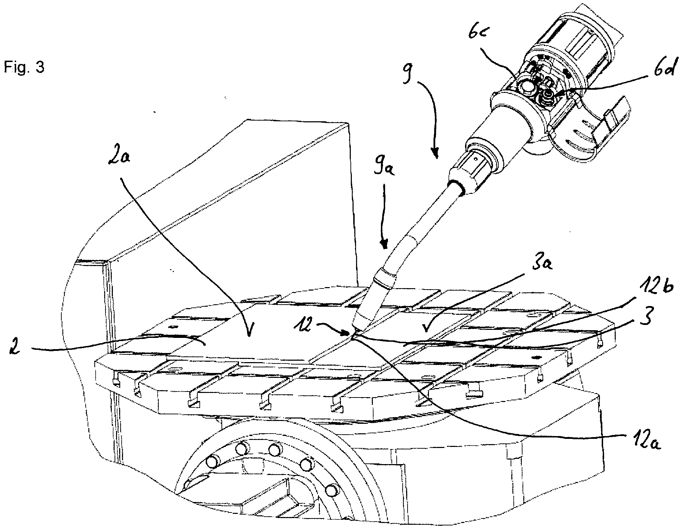

- Fig. 3: eine Detaildarstellung von zwei in ihrer Bearbeitungsposition teilweise überlappend angeordneten Blechen sowie einer geschnittenen Darstellung des Lichtbogenschweißbrenners aus Fig. 1;
- Fig. 4: eine stark schematisierte Darstellung eines vorderen Teils eines Lichtbogenschweißbrenners mit einer Deformation der Schweißdrahtspitze;
- Fig. 5: eine Darstellung eines Referenzierungsvorgangs, bei dem durch Abtrennen eines Drahtendabschnitts eine im TCP befindliche Schweißdrahtspitze erzeugt wird;
- Fig. 6: einen Verfahrensabschnitt, bei dem der Schweißbrenner sowie das aus dem Schweißbrenner herausragende Schweißdrahtende um einen Winkel α geneigt werden;
- Fig. 7: ein Verfahrensabschnitt, bei dem der Schweißbrenner auf ein Oberblech abgesenkt und die Schweißdrahtspitze mit einer Oberfläche des Oberblechs in Kontakt gebracht und ein Vorschubbewegung des Lichtbogenschweißbrenners in Richtung auf die Fügelinie bei ständigem Kontakt der Schweißdrahtspitze mit der Oberfläche begonnen wird;
- Fig. 8: ein Verfahrensabschnitt, bei dem die mit der Oberfläche in ständigem Kontakt befindliche Schweißdrahtspitze eine Stelle der Fügelinie erreicht;
- Fig. 9: ein Verfahrensabschnitt, bei die Schweißdrahtspitze das Oberblech verlassen hat, sich über dem Unterblech befindet und der Schweißdraht vorgeschoben wird, bis die Schweißdrahtspitze Kontakt mit dem Unterblech erzielt;
- Fig. 10: ein Diagramm, in dem ein Drehmomentverlauf M eines Antriebsmotors der Drahtvorschubeinrichtung sowie ein Längsbewegungsverlauf Δs der Schweißdrahtspitze in Abhängigkeit der momentanen Position der Schweißdrahtspitze auf den beiden Werkstücken sowie der Zeit abgetragen ist;
- Fig. 11: ein Verfahrensabschnitt, bei dem die Schweißdrahtspitze das Oberblech verlassen und sich über dem Unterblech befindet;
- Fig. 12: Verfahrwege der Schweißdrahtspitze über die Werkstücke von drei aufeinander folgenden Detektionsverfahrschritten, ausgehend von einem Start bis zu einem Ende der drei Verfahrwege;
- Fig. 13: ein Verfahrensabschnitt eines weiteren erfindungsgemäßen Ausführungsbeispiels, bei welchem das sich über dem Unterblech befindende Schweißdrahtende durch Bewegung des Schweißbrenners um einen Winkel α geneigt wird.
- Fig. 14: ein Verfahrensabschnitt des Verfahrens aus Fig. 14 , bei dem der Schweißbrenner auf das Unterblech abgesenkt, die Schweißdrahtspitze mit einer Oberfläche des Unterblechs in Kontakt gebracht und ein Vorschubbewegung des Lichtbogenschweißbrenners in Richtung auf die Fügelinie bei ständigem Kontakt der Schweißdrahtspitze mit der Oberfläche des Unterblechs begonnen wird;
- Fig. 15: ein Verfahrensabschnitt, bei dem die mit der Oberfläche des Unterblechs in ständigem Kontakt befindliche Schweißdrahtspitze eine Stelle der Fügelinie erreicht und hierbei an das Oberblech anstößt;
- Fig. 16: ein Verfahrensabschnitt, bei dem der Lichtbogenschweißbrenner zusammen mit seinem Schweißdraht von der Oberfläche des Unterblechs abgehoben wird;
- Fig. 17: ein Verfahrensabschnitt, bei dem die zunächst mit dem Unterblech noch in Kontakt befindliche Schweißdrahtspitze wieder in den TCP zurückgeschoben wird;
- Fig. 18: Verfahrwege der Schweißdrahtspitze über die Werkstücke von drei aufeinander folgenden Detektionsverfahrschritten, ausgehend von einem Start bis zu einem Ende der drei Verfahrwege.
- Fig. 19: eine Kehlnahtanordnung zwischen zwei miteinander zu verschweißenden Blechen und einer stechend auf einem der Bleche bewegten Schweißdrahtspitze zur Detektion der Kehlnahtfügelinie.

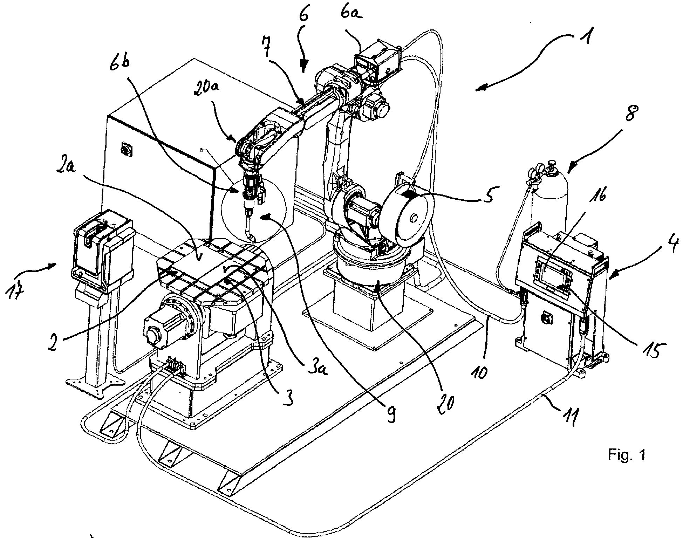

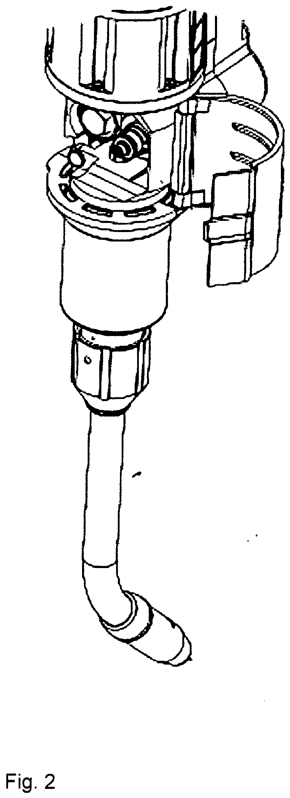

In Fig. 1 ist in stark schematisierter Form eine bevorzugte Ausführungsform einer erfindungsgemäßen automatisierten Lichtbogenschweißanlage 1 zusammen mit miteinander zu verschweißenden Werkstücken 2, 3 dargestellt. Diese weist eine Schweißstromquelle 4, einen Schweißdrahtvorrat 5, eine Drahtvorschubeinrichtung 6, ein Schlauchpaket 7, eine Schutzgasversorgung 8 sowie einen Lichtbogenschweißbrenner 9 auf. Die Schweißstromquelle 4 ist mittels eines ersten Polkabels 10 mit dem Schlauchpaket 7 und mit einem zweiten Polkabel 11 mit dem Werkstück 2 über dessen Spannvorrichtung elektrisch leitend verbunden. Der Lichtbogenschweißbrenner 9 ist am Ende des Schlauchpakets 7 angebracht. Sowohl die Schutzgasversorgung 8 als auch der Schweißdrahtvorrat 5 ist an das Schlauchpaket 7 angeschlossen, wodurch Schutzgas und der Schweißdraht durch das Schlauchpaket und den Lichtbogenschweißbrenner bis zum offenen Ende des Lichtbogenschweißbrenners gelangt und dort aus der Kontaktdüse der Lichtbogenschweißbrenners austritt. Die Drahtvorschubeinrichtung ist im Ausführungsbeispiel zweiteilig aufgebaut, sie weist einen hinteren Drahtvorschub 6a sowie einen vorderen Drahtvorschub 6b auf. Hierbei können an sich bekannte vordere und hintere Drahtvorschübe 6a, 6b vorgesehen sein. Mit dem zwischen dem Schweißdrahtvorrat 5 und dem Schlauchpaket 7 angeordneten hinteren Drahtvorschub 6a wird der Schweißdraht 12 vom Schweißdrahtvorrat 5 abgezogen und in das Schlauchpaket 7 hineingefördert. Mit dem im Bereich des Lichtbogenschweißbrenners 9 angeordneten vorderen Drahtvorschub 6b wird der Schweißdraht aus dem Schlauchpaket herausgezogen und zum offenen Ende des Lichtbogenschweißbrenners gefördert. Wie aus Fig. 2 hervorgeht, weist der vordere Drahtvorschub 6b zwei Rollen 6c, 6d auf. Von diesen kann eine mittels eines in Fig. 2 durch andere Komponenten verdeckten Elektromotors angetrieben sein. Der Schweißdraht ist hierbei zwischen der angetriebenen Rolle 6c und einer passiven Gegenrolle 6d geführt. Die Rotationsbewegung des Elektromotors wird dabei auf die angetriebene Rolle 6c und von dieser als Vorschubbewegung auf den Schweißdraht übertragen. Die Gegenrolle 6d rotiert hierbei passiv mit und dient vor allem zur Führung des Schweißdrahts.

Durch diese an sich bekannte Anordnung lassen in an sich bekannter Weise Lichtbogenschweißungen ausführen, mit denen an Werkstücken Schweißnähte ausgeführt werden können. Die Nahterzeugung basiert hierbei auf einem Abschmelzen des im Schlauchpaket 7 und im Schweißbrenner 9 vorschiebbaren Schweißdrahts 12, wobei hierzu zwischen einer Schweißdrahtspitze und dem jeweiligen Werkstück ein Lichtbogen und gegebenenfalls alternierend hierzu ein Kurzschluß erzeugt wird, wodurch der Schweißdraht und lokal das Werkstück bzw. die Werkstücke aufgeschmolzen werden, ineinander fließen und durch Erstarren miteinander verbunden werden.

Die Schweißstromquelle 4 ist zudem mit einer Schweißstromquellensteuerung 15 und einer Bedieneinrichtung 16 der Steuerung versehen, mit welcher Schweißparameter und Funktionen der Schweißstromquelle 4 und des Schweißprozesses einstellbar sind. Insbesondere sind mittels der Steuerung und deren Bedieneinrichtung auch die Drahtvorschubeinrichtung 6 und deren Elektromotor steuerbar oder regelbar. Es sind hierbei unter anderem Beträge und Richtung der Vorschubgeschwindigkeit und auch der Betrag eines Drehmoments des Antriebsmotors der Drahtvorschubeinrichtung einstellbar.

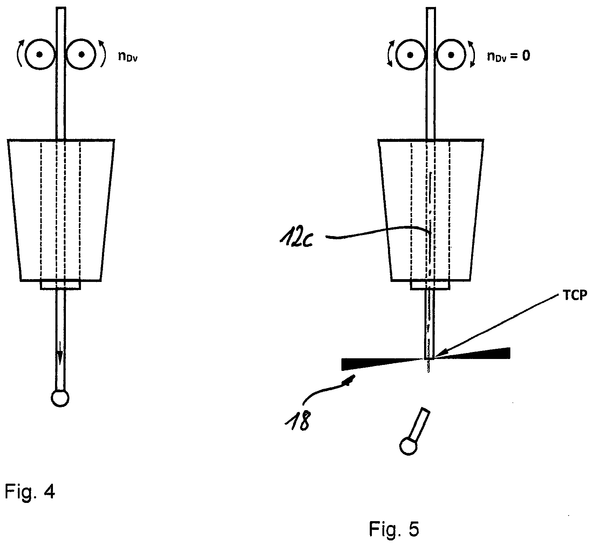

In Fig. 1 ist zudem eine Reinigungsstation 17 dargestellt, die ein nicht im Detail gezeigtes Kürzungswerkzeug beinhaltet. Das in Fig. 4 und 5 schematisch gezeigte Kürzungswerkzeug kann Bestandteil der in Fig. 1 dargestellten Reinigungsstation 17 für das vordere Schweißbrennerende 9a sein. In der Reinigungsstation 17 kann unter anderem das Schweißbrennerende 9a und gegebenenfalls die Schweißdrahtspitze 12a mit dazu geeigneten und an sich vorbekannten Mitteln von Schweißspritzern befreit werden können. Das Kürzungswerkzeug 18 ist mittels der Steuerung ansteuerbar und seine Funktionen auslösbar. Beim Kürzungswerkzeug 18 handelt es sich beispielsweise um einen Drahtabschneider oder Drahtschere, deren Schneiden derart angeordnet sind, daß sie durch Kürzen des Schweißdrahts eine neue Schweißdrahtspitze erzeugen können, die sich im Tool Center Point (TCP) befindet.

Die Lichtbogenschweißbrennereinrichtung 1 ist zur Verwendung in einem Schweißautomaten, wie beispielsweise dem in Fig. 1 dargestellten Schweißroboter 20 vorgesehen. Der Lichtbogenschweißbrenner 9 der Lichtbogenschweißbrennereinrichtung 1 ist hierbei an einem Endmanipulator 20a des Roboters 20 angeordnet, der in verschiedenen Raumrichtungen, vorzugsweise in sämtlichen Raumrichtungen auf beliebigen Vorschubwegen bewegbar ist. Der Endmanipulator 20a kann hierdurch den Lichtbogenschweißbrenner 9 auf seinem Vorschubweg mitführen und der Lichtbogenschweißbrenner 9 hierdurch an Werkstücken Schweißnähte ausführen. Der Lichtbogenschweißbrenner 9 kann hierbei vorzugsweise in prinzipiell gleicher Weise ausgebildet sein, wie der in der WO 2005/049259 A1 offenbarte und beschriebene Lichtbogen-Schweißbrenner, wobei hier Unterschiede hinsichtlich des Endbereichs des Lichtbogenschweißbrenners 9 aus Fig. 1 vorhanden sind, beispielsweise die Integration des vorderen Drahtvorschubs 6b. Prinzipiell kann für diesen Typ an Lichtbogenschweißbrennern 9 jede Art an Hohlwellenrobotern zum Einsatz kommen, ein solcher ist in Fig. 1 in prinzipieller Weise beispielhaft dargestellt. Im Zusammenhang mit der Erfindung können jedoch auch jegliche andere Typen von Lichtbogenschweißbrennern und Robotern zum Einsatz kommen, insbesondere können auch andere Mehrachsenroboter als Hohlwellenroboter und andere Lichtbogenschweißbrenner als solche, wie sie in der WO 2005/049259 A1 beschrieben sind, verwendet werden. So können beispielsweise auch Portalroboter zum Einsatz kommen. Außerdem ist es möglich, daß die erforderlichen Relativbewegungen zwischen den Werkstücken und dem Schweißdraht durch Bewegungen des Werkstücks ausgeführt werden, also insbesondere durch Bewegungen von Werkstückspanneinrichtungen. Ebenso kann eine Aufteilung der erforderlichen Relativbewegungen auf die Werkstücke und die den Schweißdraht, also den Lichtbogenschweißbrenner vorgesehen sein.

Im Zusammenhang mit der Erfindung können insbesondere auch Mehrachsenroboter verwendet werden, die an ihrer letzten Drehachse mit einem Auslegerarm versehen sind, an dessen freien Ende ein Lichtbogenschweißbrenner montiert ist. Eine Rotationsbewegung der letzten Roboterachse führt somit nicht zu einer Rotationsbewegung des Lichtbogenschweißbrenners um seine eigene Längsachse sondern zu einer Schwenkbewegung des gesamten Lichtbogenschweißbrenners um die letzte Roboterachse. Ebenso ist es im Zusammenhang mit jeder Ausführungsform der Erfindung möglich, die zwischen dem Werkstück und dem Schweißbrenner erforderliche Relativbewegung durch das zumindest eine Werkstück auszuführen und den Lichtbogenschweißbrenner ortsfest vorzusehen. Das oder die Werkstücke können somit durch einen Manipulator hierbei bewegt werden. Ebenso ist es möglich die Relativbewegung durch Teilbewegungen des zumindest einen Werkstücks und Teilbewegungen des Lichtbogenschweißbrenners auszuführen.

Durch die nicht zwingend notwendige, jedoch bevorzugte Ausführungsform des Lichtbogenschweißbrenners 9, wonach dieser einen außenliegenden Statorteil und einen innenliegenden Rotorteil aufweist und eine Zuführung und Versorgung der Schweißstelle mit Schweißmedien zumindest im wesentlichen entlang einer und koaxial zu einer Rotationslängsachse der Lichtbogenschweißbrennereinrichtung und des Endmanipulators erfolgt, kann eine Endlosrotationsmöglichkeit des Schweißbrenners 9 erreicht und eine Verdrillung eines Schweißkabels (Schlauchpaket) bei Rotationsbewegungen vermieden werden. Es wird jedoch explizit nochmals darauf hingewiesen, dass der hier gezeigte und erörterte Lichtbogenschweißbrenner 9 lediglich beispielhaft für die Erfindung angeführt ist und die Erfindung grundsätzlich auch im Zusammenhang mit anderen Typen von Lichtbogenschweißbrennern und insbesondere auch mit Lichtbogenschweißbrennereinrichtungen zum Einsatz kommen kann, deren konkreter Aufbau vom Aufbau der nachfolgend erörterten Lichtbogenschweißbrennereinrichtung 1 abweicht.

Bei der lediglich beispielhaft für die Erfindung dargestellten Lichtbogenschweißbrennereinrichtung 1 handelt es sich um einen nach dem Metall-Schutzgas Schweißverfahren arbeitenden Schweißbrenner 9. Bei diesem wird ein beim Schweißprozeß abschmelzender Schweißdraht 12 der vorgesehenen Schweißstelle zu- und aufgrund des Verbrauchs des Schweißdrahts 12 während eines Schweißprozesses kontinuierlich nachgeführt. Der Schweißdraht 12 wird hierbei in der Regel zusammen mit seiner Drahtseele und vorzugsweise einer den Schweißdraht umgebenden Isolierung durch das Innere des Schweißbrenners 9 zugeführt. Zusätzlich wird ein Schutzgas der Schweißstelle zugeführt. Im Ausführungsbeispiel ist das Schutzgas ein Inertgas, in anderen erfindungsgemäßen Ausführungsbeispielen kann als Schutzgas auch ein Aktivgas - oder eine Mischform von beiden - zugeführt werden. Im bevorzugten Ausführungsbeispiel wird zudem im Bereich des hinteren freien Endes der Lichtbogenschweißbrennereinrichtung 1 mit einem der Polkabel 10, 11 Strom in die Lichtbogenschweißbrennereinrichtung 1 eingeleitet und durch die Lichtbogenschweißbrennereinrichtung 1 zur Schweiß- bzw. Prozeßstelle geleitet, der dazu genutzt wird, an der Schweißstelle bzw im Bereich des schweißprozeßseitigen Endes des Lichtbogenschweißbrenners 9, einen Lichtbogen zu zünden und für den Schweißvorgang aufrecht zu erhalten. Die Lichtbogenschweißbrennereinrichtung 1 ist deshalb in ihrem Einsatz mit der Schweißstromquelle 4 und der Drahtvorschubeinrichtung 6 verbunden bzw mit diesen versehen. In bevorzugten Ausführungsbeispielen können sowohl der Schweißdraht 12, als auch das Schutzgas und der Strom über ein an sich bekanntes Schweißkabel, insbesondere ein Koaxialschweißkabel als Schlauchpaket 7, dem Lichtbogenschweißbrenner 9 an seiner Stromanschlußstelle zugeführt werden. An einer Gasanschlußstelle der Lichtbogenschweißbrennereinrichtung 1 wird das Schutzgas in eine Durchleitung des Schweißbrenners 9 in dessen Inneres zur Durchführung des Schutzgases von der Gasanschlußstelle zum freien Ende an die Schweißstelle, eingeleitet. Der Strom wird ebenso vom Schweißkabel 7 durch den Schweißbrenner 9 zur Schweiß- bzw. Prozeßstelle geleitet. Auch der Strom wird im Inneren des Schweißbrenners 9 zur Prozeßstelle geleitet und zwar in einer Weise, in welcher eine Außenseite der Lichtbogenschweißbrennereinrichtung 1 stromfrei ist.

Der Lichtbogeschweißbrenner 9 weist somit einen Brennerhals 9a auf, der über den dazwischengeschalteten vorderen Drahtvorschub 6b der Drahtvorschubeinrichtung 6 mit dem Schlauchpaket verbunden ist. Im bevorzugten Ausführungsbeispiel der Erfindung verläuft das Schlauchpaket in etwa vom hinteren Drahtvorschub 6a zum vorderen Drahtvorschub 6b. In anderen Ausführungsbeispielen kann das vordere Ende des Schlauchpakets auch direkt am Lichtbogenschweißbrenner angeschlossen sein.

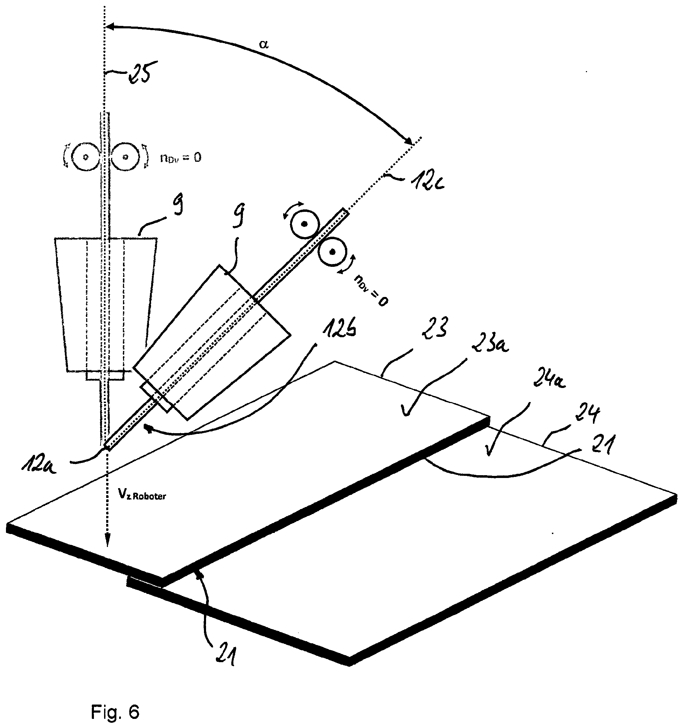

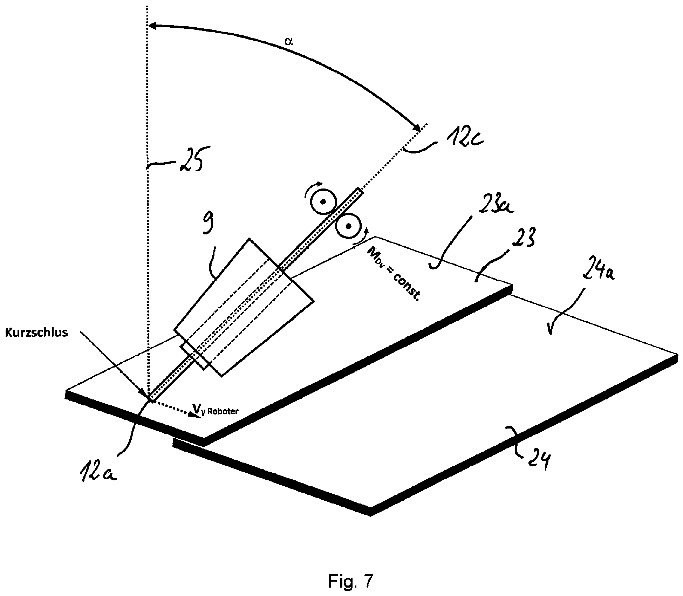

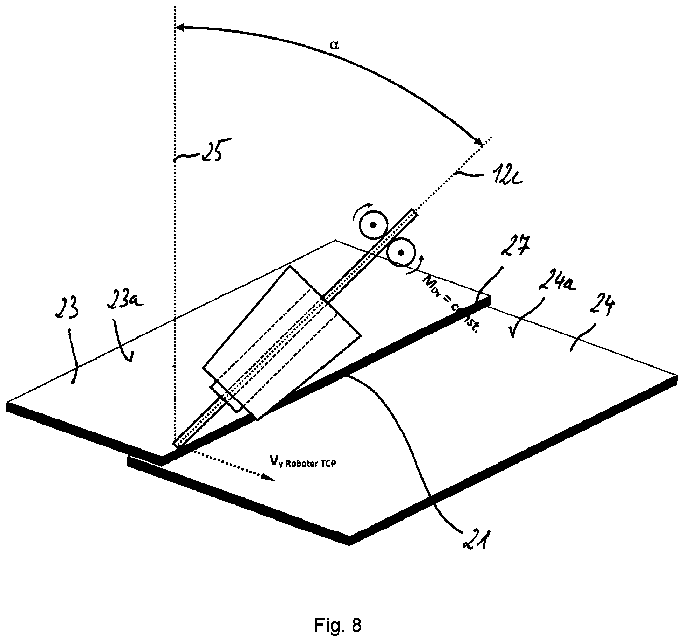

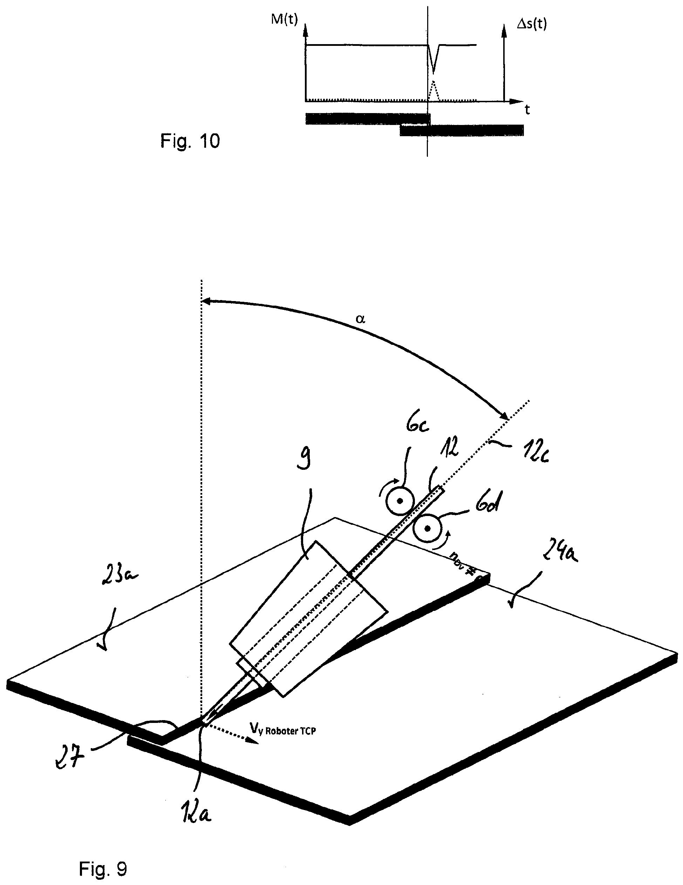

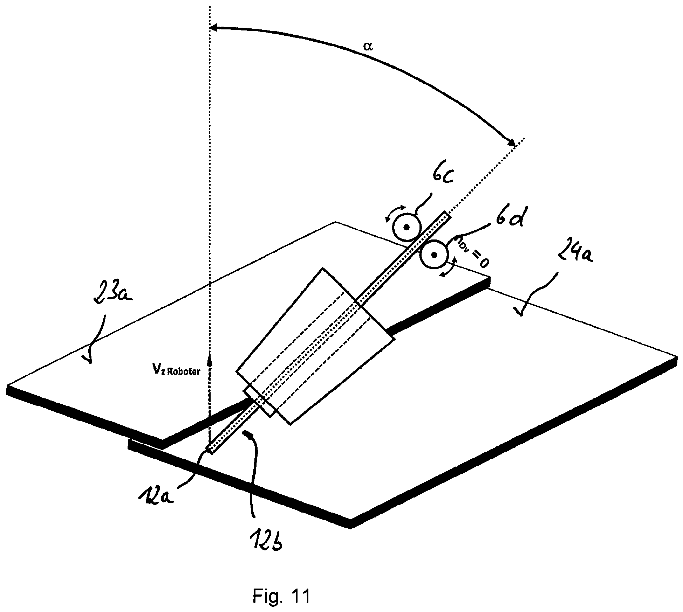

In den Fig. 6 bis 12 ist eine bevorzugte Ausführungsform des erfindungsgemäßen Verfahrens dargestellt. Es handelt sich hierbei um eine Ausführungsform, bei welcher der Lichtbogenschweißbrenner 9 und der Schweißdraht 12 in Bezug auf eine Oberfläche 2a eines der Werkstücke 2, 3 schleppend, was auch als ziehend bezeichnet werden kann, mit seiner Schweißdrahtspitze 12a dabei mit ständigen ununterbrochenem Kontakt mit der Oberfläche über letztere geführt wird.

Zu Beginn kann vorzugsweise der Schweißdraht 12 und sein Lichtbogenschweißbrenner 9 für ein oder mehrere mittels des Schweißroboters 20 ausgeführte Detektionsverfahrwege vorbereitet werden. Hierbei sollen vor allem undefinierte Zustände des Drahtendes für die Ausführung von nachfolgenden Detektionsverfahrschritten beseitigt und solche damit vermieden werden. Durch vordefinierte Zustände des Drahtendes bzw der Schweißdrahtspitze 12a läßt sich die Funktionsgenauigkeit des erfindungsgemäßen Verfahrens vorteilhaft erhöhen. Der Schweißdraht 12 kann im Lichtbogenschweißbrenner 9 mittels der Drahtvorschubeinrichtung 6 nach vorne verfahren werden, so daß auch eventuelle Drahtenddeformationen oder am Drahtende befindlichen Schlacken von vorausgegangenen Schweißprozeßen den TCP (Tool Center Point) überschritten haben und außerhalb des TCP's liegen. Auch eine solche undefinierte Form der Schweißdrahtspitze 12a kann zu Messungenauigkeiten des nachfolgenden zumindest einen Detektionsverfahrschritts führen. Der Schweißbrenner 9 kann zudem mittels des ihn führenden Mehrachsenroboters 20 zuerst in die Reinigungsstation 17 verfahren werden, insbesondere um dort durch einen Schneidvorgang des Schweißdrahts 12 eine neue, sich im TCP befindende, Schweißdrahtspitze 12a zu erzeugen. Beim TCP handelt es sich um einen von der Robotersteuerung angenommenen relativen Nullpunkt des Koordinatensystems, einen Arbeitspunkt, auf den sich sämtliche weitere Koordinaten- und Wegangaben beziehen, und auf dessen Grundlage die Robotersteuerung den Schweißroboter 20 und damit auch den Schweißbrenner 9 bewegt und steuert.

Der Schweißdraht 12 kann für den nachfolgenden Kürzungsvorgang bezüglich einer Ausrichtung der Längsachse des Schweißdraht im Bereich des aus dem Brenner 9 austretenden Schweißdrahtendes 12b senkrecht, d.h. lotrecht, ausgerichtet sein. Danach wird der Motor des vorderen Drahtvorschubs 6b derart bestromt, daß der Draht 12 zwischen der durch den Motor angetriebenen Antriebsrolle 6c und der passiven Gegenrolle 6d geklemmt bzw. blockiert ist. Eine solche Blockierung des Motors und damit Klemmung des Schweißdrahts 12 kann insbesondere durch einen Kurzschluß der Motorwicklungen erreicht werden. Alternativ kann der Motor auch schwach derart bestromt sein, daß sich der Schweißdraht nicht bewegt und durch das geringe Drehmoment des Motors in seiner Position gehalten ist. Mittels einer solchen Klemmung kann verhindert werden, daß sich der Schweißdraht 12 bei einer von außen aufgebrachten Belastung in axialer Richtung bewegt. Es kann außerdem verhindert werden, daß sich der Motor bei einer, insbesondere von außen aufgebrachten, axialen Belastung auf den Schweißdraht 12 und dadurch axialen Bewegung des Schweißdrahts 12, dreht. Nachdem die Drahtvorschubeinrichtung 6 und damit auch der Draht blockiert bzw fixiert ist, kann nun mittels des Kürzungswerkzeugs 18, beispielsweise eine automatisch betätigten Drahtschere, ein über den TCP überstehender Abschnitt des Schweißdrahts 12 abgeschnitten werden. Das hierdurch neu geschaffene Schweißdrahtspitze 12a befindet somit exakt im TCP. Sämtliche weiteren Bewegungen des robotergeführten Lichtbogenschweißbrenners können nun auf den TCP und damit exakt auf diese Schweißdrahtspitze 12a bezogen werden.

In der Robotersteuerung ist ein vom Lichtbogenschweißbrenner 9 unter Anwendung bestimmter Schweißparameter abzufahrender Schweißweg zur Erzeugung einer Schweißnaht eingeteacht und abgespeichert. Zur Ausführung eines ersten Detektionsverfahrwegs verfährt der Schweißroboter 20 den Lichtbogenschweißbrenner 9 in die Nähe der Fügelinie und damit auch in die Nähe des abgespeicherten Soll-Verfahrwegs des Lichtbogenschweißbrenners für die durchzuführende Schweißnahterzeugung. Prinzipiell kann die Fügelinie mit dem Schweißweg zur Erzeugung einer Schweißnaht übereinstimmen. Es ist aber auch möglich, daß aus schweißtechnischen Gründen zwischen der Fügelinie und dem Schweißweg ein Versatz besteht. Im Ausführungsbeispiel ist die Fügestelle ein Überlappstoß, der sich aus zwei übereinander liegenden Blechen als erstes und zweites Werkstück 2, 3 ergibt, die miteinander verschweißt werden sollen. Der Lichtbogenschweißbrenner 9 wird deshalb in eine Position über dem Oberblech 23 der beiden Bleche 23, 24 und mit Abstand zur Fügelinie verfahren. Bis zu diesem Zeitpunkt sollte noch kein Kontakt zwischen dem Schweißdraht 12 und der Oberfläche 23a des Oberblechs 23 stattgefunden haben. Dies kann gegebenenfalls durch eine Kurzschlußerkennung der Schweißstromquelle 4 überwacht werden. Die Koordinaten dieser Position, unmittelbar bevor der Lichtbogenschweißbrenner 9 auf die Oberfläche 23a des oberen Blechs abgesenkt wird, können für nachfolgende Berechnungen in einen Speicher der Steuerung abgelegt werden. Die Koordinaten dieses Punkts können insbesondere auf den TCP bezogen sein.

Bevor der Lichtbogenschweißbrenner 9 auf die Oberfläche 23a abgesenkt wird, wird dieser um einen vorbestimmten Winkel a, bezogen auf eine Senkrechte 25 zur Oberfläche 23a des Oberblechs, zur angenommenen Fügelinie hin geneigt bzw gekippt ( Fig. 6 ). Die Kippung erfolgt um den TCP. Günstige Kippwinkel können beispielsweise aus einem Bereich α > 0°bis α = 75°, insbesondere aus einem Bereich von α = 20° bis α = 45° gewählt sein. Die Kippung um den Winkel α erfolgt dabei vorzugsweise in Richtung des nachfolgend vorgesehenen Verfahrwegs, bzw in dessen Bewegungsrichtung, des auszuführenden Detektionverfahrschritts, so daß bei der Bewegung die Schweißdrahtspitze 12a hinterher gezogen wird. Grundsätzlich ist dieses Verfahren aber auch mit nicht gekipptem Schweißdraht, also mit α = 0° denkbar. Durch einen Kippwinkel α aus diesem Winkelbereich kann ein besonders sicherer ständiger Kontakt des Schweißdrahts 12 mit der Oberfläche 23a des jeweiligen Werkstücks bei gleichzeitig möglichst geringer Gefahr eines Umknickens oder einer Verbiegung des Schweißdrahts 12 erreicht werden. Die Größe und Richtung des Kippwinkels a, insbesondere bezogen auf den TCP, können für nachfolgende Berechnungen, beispielsweise der auszuführenden Bewegungen des Schweißbrenners 9 in der Robotersteuerung gespeichert werden. Die Größe bzw der Betrag des Kipp- oder Anstellwinkels α kann zudem in Abhängigkeit der bei einem Schweißprozess vorhandenen bzw vorgesehenen Parameter und Umgebungsbedingungen variieren. Er kann in einer nicht abschließenden Aufzählung beispielsweise von einer Blechdicke des Oberblechs 23, der Spaltsituation zwischen Ober- und Unterblech 23, 24, dem Werkstoff des Schweißdrahts 12 bzw. des Drahtzusatzwerkstoffs, der Oberflächenbeschaffenheit der Bleche 23, 24, sowie der Kontur der Werkstücke abhängig sein bzw variiert werden.

Das Schweißdrahtende 12b kann vorzugsweise auch in einer Richtung quer zur vorgesehenen Bewegungsrichtung des Lichtbogenschweißbrenners beim nachfolgenden Verfahrweg, die hin zur Fügelinie 21 verläuft, um einen Winkel β geneigt sein. Auch hier ist der Neigungswinkel β bezogen auf eine Senkrechte, welche die Schweißdrahtlängsachse im Bereich des aus dem Schweißbrenner 9 herausragenden Schweißdrahtendbereichs 12b im TCP schneidet. Das Schweißdrahtende 12c ist somit bei seiner Bewegung über die Oberfläche 23a, 24a eines der Werkstücke vorzugsweise sowohl in oder entgegen der jeweiligen Vorschubrichtung um den Winkel a, als auch quer zur jeweiligen Vorschubrichtung um den Winkel β geneigt. Als Neigungswinkel β kann hierbei ein Winkel β aus einem Bereich 0° ≤ β ≤ 75°, bevorzugt aus einem Bereich 0° ≤ β ≤ 50°, besonders bevorzugt Bereich 0° ≤ β ≤ 30°, vorgesehen sein. Eine solche optionale Ausrichtung des Schweißdrahtendes 12b mit Neigungen um einen Winkel α und/oder einem Winkel β kann bei allen erfindungsgemäßen Ausführungsformen vorteilhafterweise vorgesehen sein. Solche geneigten Ausrichtungen sind jedoch nicht zwingend erforderlich.

Für den nun nachfolgenden Verfahrweg des Detektionsverfahrschritts wird der Rotor des Antriebsmotors des vorderen Drahtvorschubs 6b der Drahtvorschubeinrichtung 6 weiterhin in der zuvor beschriebenen Weise blockiert, so daß weiterhin der Antriebsmotor gegen ein Verdrehen seiner Antriebswelle, aufgrund eines über den Schweißdraht 12 von außen aufgebrachtes, mögliches Drehmoment blockiert und der Schweißdraht geklemmt ist. Da der Schweißdraht 12 in dieser Situation weitestgehend rutsch- und schlupfest zwischen Rollen 6c, 6d der Drahtvorschubeinrichtung 6b gehalten ist, kann auch keine Verschiebung des Schweißdrahts 12 in dessen axialer Richtung stattfinden. Die Schweißdrahtspitze 12a verbleibt somit im TCP und wird somit weder durch den Antriebsmotor noch durch eine von außen aufgebrachte axiale Kraft verschoben. Er wird in seiner relativen Position zum Schweißbrenner 9 und damit auch die Schweißdrahtspitze 12a im TCP gehalten. Der Roboter 20 verfährt nun mit dem eingespannten Lichtbogenschweißbrenner 9 auf die Oberfläche 23a des Oberblechs 23 zu, also mit einer Bewegungskomponente in etwa senkrecht zur Oberfläche 23a des Oberblechs 23. Vorzugsweise ist hierbei die Kurzschlusserkennung eingeschaltet, so daß ein Kontakt der Schweißdrahtspitze 12a mit der Oberfläche 23a des metallischen Oberblechs 23 detektiert wird. Für die Kurzschlußerkennung kann eine geringe Hilfs- oder Leerlaufspannung am Schweißdraht 12 anliegen und das Werkstück im Stromkreis des Schweißdrahts 12 integriert sein. Sobald die Drahtspitze 12a die Oberfläche 23a berührt, wird dies durch die Kurzschlußerkennung festgestellt und der Roboter 20 in seiner Verfahrbewegung auf das Oberblech 23 zu, durch die Steuerung sofort gestoppt. Die Koordinaten dieser ersten Kontaktstelle des Schweißdrahts 12 können in der Steuerung für spätere Berechnungen der Koordinaten der IST-Fügestelle im Speicher abgelegt werden.

Der Roboter 20 beginnt nun den Lichtbogenschweißbrenner 9 mit der dabei ununterbrochen mit der Oberfläche 23a des Oberblechs 23 in Kontakt befindlichen Schweißdrahtspitze 12a in Richtung auf die von der Steuerung angenommene Fügekante 21 des Oberblechs 23 mit dem Unterblech 24 zuzubewegen. Der Schweißdraht 12 ist dabei weiterhin und ununterbrochen in der Drahtvorschubeinrichtung 6, hier dem vorderen Drahtvorschub 6b, geklemmt. Die vom Roboter 20 verwendete Bewegungsrichtung kann hierbei vorzugsweise zumindest in etwa senkrecht zum angenommenen und in der Steuerung abgelegten Verlauf der Fügekante 21 ausgerichtet und vorgenommen sein. Falls die Oberfläche 23a des Oberblechs einen dreidimensionalen Verlauf hat, so kann die senkrechte Ausrichtung in Bezug auf eine Projektion der Oberfläche 23a und der angenommenen Fügekante 21 jeweils in die X-Y Ebene vorgesehen sein, wobei der tatsächliche Verfahrweg des Mehrachsenroboters 20 noch durch die Z-Koordinate des Oberflächenverlaufs ergänzt ist.

Trifft die Schweißdrahtspitze 12a dann auf die Fügekante 21, wird die Spitze 12a über die Begrenzungskante 27 des Oberblechs 23 dessen Oberfläche 23a verlassen. Aufgrund des Absatzes bzw. Höhenunterschieds zum Unterblech 24 verliert die Schweißdrahtspitze 12c beim Überfahren der Begrenzungskante 27 des Oberblechs 23 den Kontakt mit dem Oberblech. Aufgrund des Kontaktverlusts und aufgrund des Verlassens des Oberblechs 23 führt dies einerseits dazu, daß der Kurzschluß mit dem Oberblech 23 aufgehoben ist und die Kurzschlußerkennung dies detektiert und feststellt. Andererseits kann der durch die Schweißstromquellensteuerung 15 festgestellte Kontaktverlust auch dazu führen, daß die Schweißstromquellensteuerung 15 dieses Ereignis der Robotersteuerung mitteilt und letztere daraufhin die Verfahrbewegung des Schweißbrenners 9 stoppt.

Anstelle des elektrischen Kontakts bzw Kurzschlußes kann auch eine andere auf den Änderungen der Kontaktverhältnissen basierende Detektionsgröße dienen. So könnte beispielsweise, bei diesem wie auch bei allen anderen erfindungsgemäßen Ausführungsformen, auch eine auf den Schweißdraht 12 wirkende Kraftänderung als Reaktion auf eine Kontaktänderung herangezogen werden. Eine solche könnte beispielsweise mittels Dehnungsmeßstreifen oder anderen geeigneten Sensoren detektiert werden. Eine weitere Möglichkeit besteht in der Detektion von Motorstromänderungen als Reaktion auf Kontaktänderungen der Schweißdrahtspitze 12a mit der jeweiligen Werkstücküberfläche. Hierbei kann genutzt werden, daß der Motor versucht den Schweißdraht in seiner Position im TCP zu halten. Etwaige auf den Draht wirkende Kraftänderungen führen zu Motorstromänderungen. Ein Regler des Tachometers der Drahtvorschubeinrichtung kann dann auf den Motor einwirken, um sicherzustellen, daß der Motor den Schweißdraht 12 in seiner Position hält. Der Eingriff des Reglers kann hierbei als Detektionsereignis genutzt werden. Sobald der Regler eingreift, kann dies durch die Steuerung als Änderung der Kontaktverhältnisse der Schweißdrahtspitze interpretiert werden.

Um mit dieser Vorgehensweise Informationen zum IST-Verlauf der Fügekante 21 zu ermitteln, kann in der hier beschriebenen bevorzugten Ausführungsform der Erfindung die Kontaktänderung der Schweißdrahtspitze 12a mit der Oberfläche 23a des abgefahrenen Werkstücks als Detektionssignal verwendet werden. Die seit dem Start dieses Detektionsverfahrwegs bis zur Änderung, hier Verlust, des Kontakts bzw Aufhebung des Kurzschlußes, verstrichene Zeit, sowie mittels der dabei verwendeten konstanten Geschwindigkeit der Verfahrbewegung und der Verfahrrichtung des Schweißbrenners können die Koordinaten der Stelle bestimmt werden, an der sich die Schweißdrahtspitze 12a beim Eintritt der Kontaktänderung befindet. Diese Koordinaten werden in der Robotersteuerung abgelegt und stellen einen Punkt bzw eine Stelle des tatsächlichen Verlaufs der Fügelinie 21 dar. Der geklemmte Schweißdraht 12 befindet sich nun außerhalb der Oberfläche 23a des ersten Werkstücks, hier Oberblech 23, und nun über dem zweiten Werkstück, hier Unterblech 24, ohne letzteres zu berühren. Anschließend entfernt der Mehrachsenroboter 20 den Schweißbrenner 9 von beiden Werkstücken, indem er ihn beispielsweise durch eine Verfahrbewegung im wesentlichen senkrecht zu den beiden Oberflächen von diesen Oberflächen weiter entfernt.

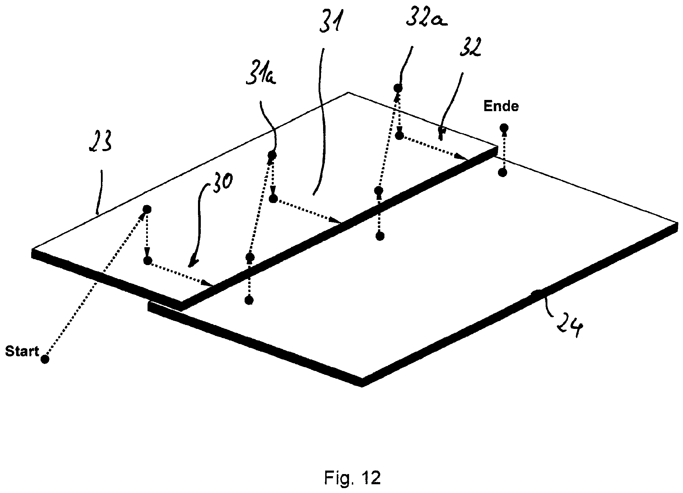

Nachfolgend wird der zuvor ausgeführte erste Detektionsverfahrschritt an zumindest einer anderen Stelle der Oberfläche 23a des Oberblechs 23 in prinzipiell gleicher Weise wiederholt, um zumindest eine zweite Stelle des IST-Verlaufs der Fügelinie 21 zwischen dem Oberblech 23 und dem Unterblech 24 zu detektieren. Bei geradlinig verlaufenden Fügelinien 21 werden in der beschriebenen Weise vorzugsweise zumindest drei zueinander beabstandete Stellen des IST-Verlaufs ermittelt und hierzu zumindest drei Detektionsverfahrschritte ausgeführt. Die Bewegungsbahnen bzw Verfahrwege dieser vorzugsweise in prinzipiell gleicher Weise ausgeführten Detektionsverfahrschritte sollten möglichst gleichmäßig über die Länge des im Speicher der Robotersteuerung elektronisch erfaßten SOLL-Verlaufs der Fügekante 21 verteilt sein. In Fig. 12 sind diese bevorzugten zumindest drei Detektionsverfahrschritte 30, 31, 32 schematisch dargestellt. Wie daraus hervorgeht, verfährt der Roboter 20 den Lichtbogenschweißbrenner, ausgehend vom ersten Detektionsverfahrschritt 30, unmittelbar zur Startstelle 31a des zweiten Detektionsverfahrschritts 31. Diese Startstelle befindet sich wieder über dem Oberblech 23. Sobald der Lichtbogenschweißbrenner 9 sich an dieser Startstelle 31a befindet, werden sämtliche Verfahrensschritte aus dem ersten Detektionsverfahrschritt in identischer Weise für den zweiten Detektionsverfahrschritt ausgeführt. Dies bedeutet, vorzugsweise werden die Koordinaten der Startstelle 31a abgespeichert, der Lichtbogenschweißbrenner 9 wird um die Winkel α und β in Bezug auf eine Senkrechte zur Oberfläche, welche durch die Schweißdrahtspitze 12a verläuft, gekippt (sofern er nicht bereits um diese Winkel α und β gekippt ist), der Schweißdraht 12 durch Kurzschliessen der Wicklungen des Motors der Drahtvorschubeinrichtung, insbesondere des vorderen Drahtvorschubs 6b, zwischen deren Rollen 6c, 6d geklemmt, der Lichtbogenschweißbrenner 9 mittels des Roboters 20 langsam auf die Oberfläche 23a des Oberblechs 23 abgesenkt und die Kurzschlußerkennung aktiviert. Sobald die Schweißdrahtspitze 12a die Oberfläche 23a berührt, wird die Bewegung des Roboters aufgrund des erkannten Kurzschlußes und eines entsprechenden Detektionssignals gestoppt und vorzugsweise die Koordinaten der Kontaktstelle im Speicher abgespeichert. Die weiterhin und während der Dauer des nun abgefahrenen Verfahrwegs dauerhaft geklemmte Schweißdrahtspitze 12a wird nun wiederum schleppend und mit konstant vorhandenem Kontakt mit der Oberfläche 23a über letztere gezogen. Bei Überfahren der Begrenzungskante 27 des Oberblechs 23 und einem dadurch bedingten Erkennen eines Unterbruchs des Kurzschlußes zwischen der Drahtspitze 12a und der Oberfläche 23a des Oberblechs, wird eine Stelle der Fügelinie 21 detektiert und die Koordinaten dieser zweiten detektierten Stelle der Fügelinie 21 im Speicher abgespeichert. Abschließend wird für diesen Detektionsverfahrschritt 31 der vorzugsweise weiterhin geklemmte Schweißdraht 12 von den Werkstücken entfernt, also abgehoben.

Wiederum von diesem Endpunkt 31b des unmittelbar vorausgegangen Detektionsverfahrschritts, hier des zweiten Detektionsverfahrschritts 31, wird der Schweißbrenner 9 zum Startpunkt 32a des nächsten Detektionsverfahrschritts 32 verfahren, hier des dritten und letzten Detektionsverfahrschritts 32. Der Verfahrweg des dritten Detektionsverfahrschritts 32 ist zum zweiten und mit noch größerem Abstand zum ersten Detektionsverfahrschritt 30 beabstandet. Der dritte Detektionsverfahrschritt 32 wird in gleicher Weise wie der erste und der zweite Detektionsverfahrschritts 30, 31 ausgeführt, auf welche hiermit für den dritten Detektionsverfahrschritt Bezug genommen und deren Inhalte hiermit aufgenommen werden. Hierbei ist insbesondere darauf hinzuweisen, daß auch hier zunächst ein elektrisch leitender Kontakt der Schweißdrahtspitze 12a mit dem Werkstück festgestellt, der Schweißdraht 12 um die beiden Winkel α und β zur Oberfläche 23a und in Verfahrrichtung sowie quer zur Verfahrrichtung gekippt und mit ununterbrochen vorhandenem Kontakt mit der Oberfäche 23a über diese geführt wird, um bei eintretendem Verlust des Kontakts die Koordinaten der zu diesem Zeitpunkt von der Schweißdrahtspitze eingenommenen Position im Speicher der Robotersteuerung abzulegen. Vorzugsweise wird, wie zuvor bei den vorausgegangenen Detektionsverfahrschritten, der Robotersteuerung durch der Schweißstromquellensteuerung mittels eines Signals mitgeteilt, daß die bei Empfang des Signals eingenommene Position der Schweißdrahtspitze 12a in Form der entsprechenden X-Y-Z Koordinaten abgespeichert werden sollen.

Aus den Koordinaten der drei detektierten Stellen der Fügelinie 21 wird nun von der Steuerung durch Interpolation ein dreidimensionaler IST-Verlauf der Fügelinie 21 und damit ein IST-Verlauf des nachträglich abzufahrenden Schweißwegs des vom Roboter geführten Lichtbogenschweißbrenners berechnet. Da der Steuerung bekannt ist, daß die Fügelinie 21 einen geradlinigen Verlauf haben muß, kann vorgesehen sein, daß die Steuerung aus den drei Punkten eine Gerade berechnet, die derart verläuft, daß sie allen drei Punkten möglichst nahe kommt. Alternativ kann auch vorgesehen sein, daß als Fügelinie eine Punkt zu Punkt Verbindung berechnet wird und somit die Fügelinie 21 von erstem zum zweiten Punkt und vom zweiten zum dritten Punkt jeweils geradlinig verläuft, die gesamte Fügelinie somit aber einen insgesamt nicht geradlinig verlaufenden Polygonzug darstellt. Falls bei einer geradlinig verlaufenden SOLL_Fügelinie 21 lediglich nur zwei Punkte bestimmt werden, kann die von der Steuerung bestimmte IST-Fügelinie eine durch die beiden Punkte verlaufende Gerade sein. Die Berechnung des IST-Verlaufs des Schweißwegs aufgrund des Verlaufs der IST-Fügelinie kann hierbei auf den TCP des Lichtbogenschweißbrenners, also auf die Schweißdrahtspitze, bezogen sein. Der IST-Verlauf des Schweißwegs muß nicht zwingend identisch mit dem Verlauf der IST-Fügelinie 21 sein. Je nach Schweißaufgabe kann der errechnete IST-Verlauf des Schweißwegs beispielsweise einen Versatz zur IST-Fügelinie 21 aufweisen und damit vom IST-Verlauf der Fügelinie 21 abweichen.

Schließlich ist noch anzumerken, daß in anderen Ausführungsformen der Erfindung auch eine andere Anzahl an Detektionsverfahrschritten 30, 31, 32 vorgesehen sein kann, also nur zwei oder mehr als drei Detektionsverfahrschritte. Eine deutlich größere Anzahl an Detektionsverfahrschritten kann insbesondere bei einem nicht geradlinigen Verlauf der Fügelinie 21 vorgesehen sein. Zudem können in anderen Ausführungsformen der Erfindung, die für eine Detektion von mehreren Stellen einer Fügelinie 21 vorgesehenen Detektionsverfahrschritte sich prinzipiell oder hinsichtlich ihrer Verfahrensabschnitte auch voneinander unterscheiden. Ebenso können für eine Bestimmung eines Verlaufs einer Fügelinie 21 auch zueinander nicht parallel verlaufende Verfahrwege von Detektionsverfahrschritten vorgesehen sein.

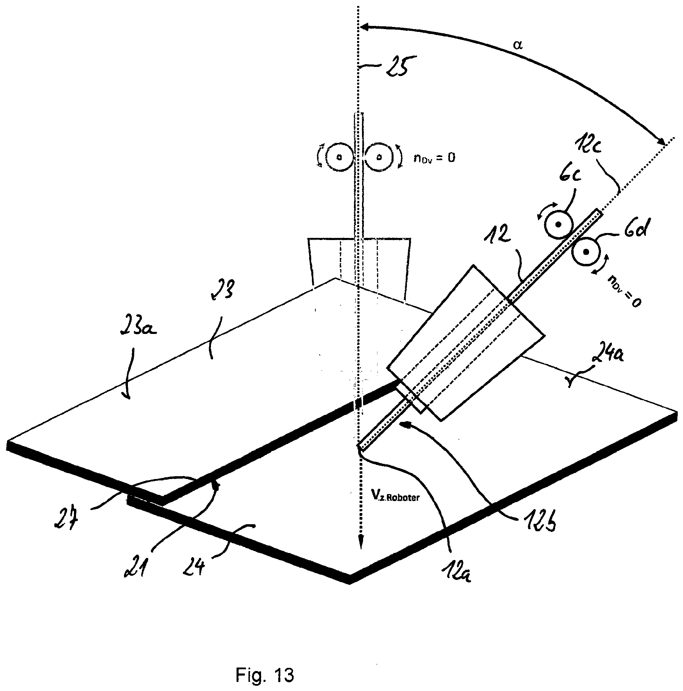

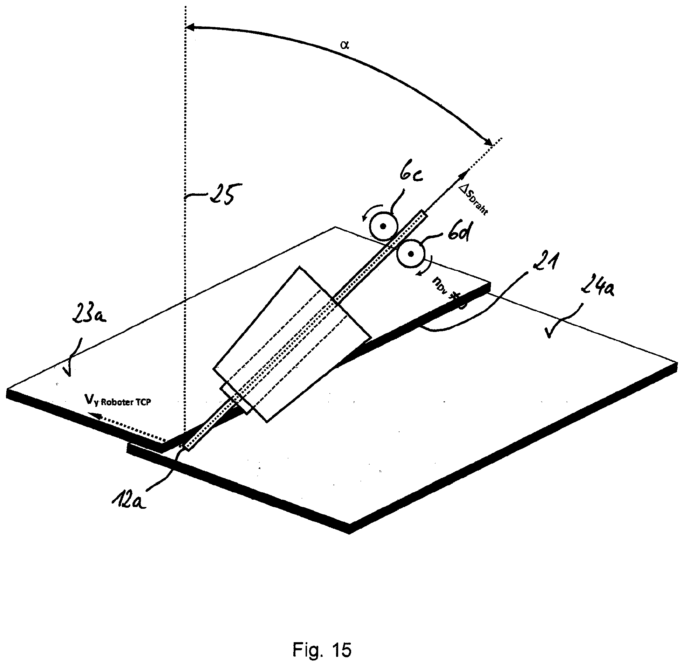

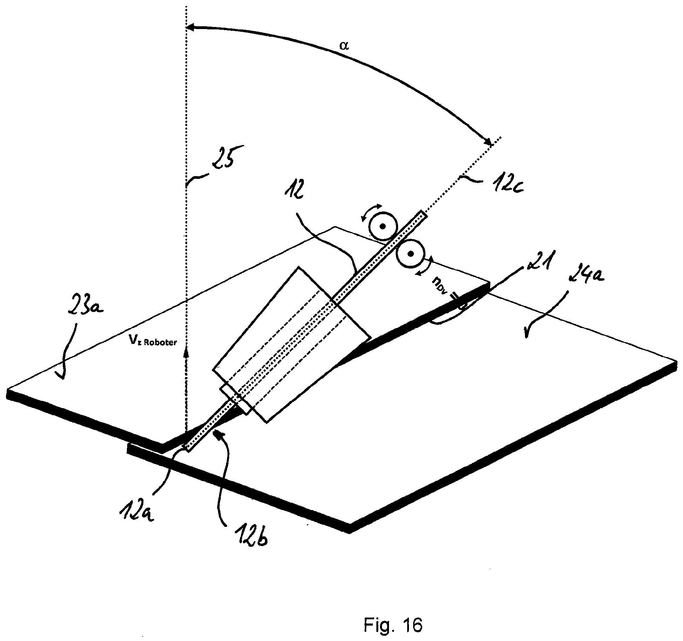

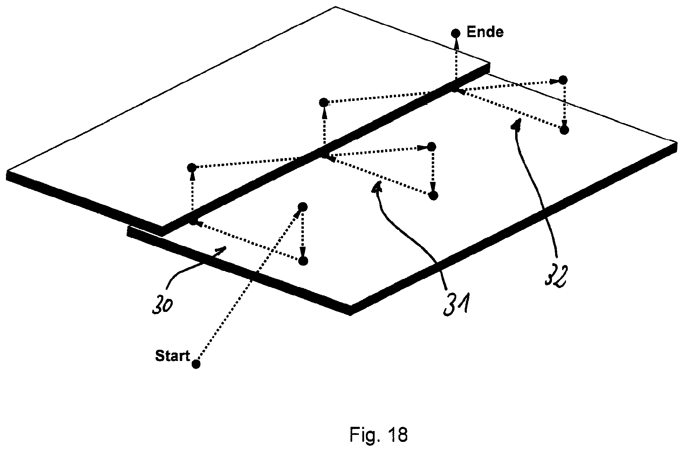

Nachfolgend wird eine weitere bevorzugte Ausführungsform der Erfindung erläutert, die in den Fig. 13 bis 18 dargestellt ist. Bei dieser kann die Schweißdrahtspitze 12a entweder mit ständigem Kontakt mit der Oberfläche 23a, 24a von einem der Werkstücke oder mit ständigem Nicht-Kontakt über die Oberfläche geführt sein, um eine Änderung dieses Kontakts bzw Nicht-Kontakts als Detektionsereignis für eine Stelle der Fügelinie 21 vorzusehen. Im Unterschied zum ersten Ausführungsbeispiel wird hier jedoch die Schweißdrahtspitze 12a nicht schleppend sondern stechend über die Werkstückoberfläche geführt, was auch als drückend bezeichnet werden kann. Auch diese bevorzugte erfindungsgemäße Ausführungsform kann insbesondere, aber nicht nur, zur Detektion einer Fügelinie 21 zwischen einem Oberblech 23 und einem Unterblech 24 dienen. Auch bei diesem Ausführungsbeispiel kann, muss jedoch nicht zwingend, zuerst das aus dem Lichtbogenschweißbrenner 9 herausragende Schweißdrahtende 12b gekürzt und/oder von unerwünschten Drahtendformen beseitigt werden wie dies in Fig. 4 und 5 gezeigt und zuvor beschrieben ist. Ebenso wie beim ersten bevorzugten erfindungsgemäßen Ausführungsbeispiel kann eine Kalibrierung bzw. Referenzierung der Schweißdrahtspitze 12a, alternativ auch durch Anfahren einer Referenzposition und Kontaktieren dieser auf einem Referenzblech, vorgenommen werden. Sobald sich der Lichtbogenschweißbrenner 9 in dieser Referenzposition befindet, kann auch bei diesem Ausführungsbeispiel der Schweißdraht 12 geklemmt werden, so daß sich die Schweißdrahtspitze 12 auch bei axialer Belastung nicht bewegen kann, beispielsweise durch Kurzschluß der Motorwindungen. Eine Kürzung des Schweißdrahtendes 12b findet vorzugsweise statt, nachdem der Draht zwischen den Rollen der Drahtvorschubeinrichtung, insbesondere des vorderen Drahtvorschubs 6b, geklemmt bzw. blockiert ist. Wird der Schweißdraht 12 nachfolgend für eine schleppende Bewegung über die Oberfläche von einem der Werkstücke 23, 24 verwendet, muß die Klemmung nicht zwingend beibehalten sondern kann auch wieder gelöst werden. Falls der Schweißdraht 12 jedoch für eine kontaktlose stechende Bewegung über die Oberfläche vorgesehen ist, sollte die Klemmung des Drahts für diese Bewegung vorzugsweise beibehalten werden.

Nachdem sich nun die Drahtspitze im TCP befindet, fährt der Roboter 20 den Schweißbrenner in die Nähe der Fügekante. Die Drahtspitze 12a ist hierbei über dem Unterblech 24 bzw ersten Werkstück und mit Abstand zu diesem angeordnet, ohne dieses Blech zu berühren (Fig. 13 ). Die Kurzschlußerkennung ist aktiv und kann sicherstellen, daß momentan noch kein Kontakt mit dem Unterblech 24 vorhanden ist. Die Koordinaten dieses Punkts bezogen auf den TCP werden vorzugsweise für nachfolgende Berechnungen im Speicher der Robotersteuerung abgelegt.

Der Lichtbogenschweißbrenner 9 und das Schweißdrahtende 12b werden um einen Winkel α geneigt, bezogen auf eine Senkrechte 25 zur Oberfläche des Unterblechs, welche die Drahtspitze in dieser Position schneidet. Die Neigung ist zudem entgegen der vorgesehenen Verfahrrichtung der Schweißdrahtspitze ausgerichtet, so daß bei der Bewegung des Schweißdrahts 12 über die Oberfläche 24a die Schweißdrahtspitze 12a vorausläuft. Vorzugsweise kann der Winkel α aus einem Bereich von größer 0° bis 75° gewählt sein. Besonders bevorzugt ist hierbei ein Winkel α von 20° bis 50°, mit welchem ein sogenannter "Stick-Slip" Effekt bei der drückenden Bewegung der Schweißdrahtspitze 12a besonders effektiv vermieden werden kann. Da vorzugsweise erfindungsgemäß möglichst ein ständiger Kontakt zwischen der Schweißdrahtspitze 12a und der Oberfläche 24a des jeweiligen Werkstücks bestehen sollte und dieser nur dann aufgehoben sein sollte, wenn die Schweißdrahtspitze 12a auf die Fügelinie 21 trifft und diese überschreitet, unterstützt die Einhaltung dieses Winkelbereichs eine möglichst hohe Funktionssicherheit zu erreichen und andere Maßnahmen dafür vermeiden zu können. Der Anstellwinkel α kann beispielsweise in Abhängigkeit der Blechdicke des oberen Fügebauteils (beispielsweise bei einem Überlappstoß), der geometrischen Spaltsituation zwischen dem oberen und unteren Fügebauteils, dem Werkstoff des Schweißdrahts 12, dem Durchmesser des Schweißdrahts 12 und der Oberflächenbeschaffenheit der Fügebauteile gewählt werden. Der Lichtbogenschweißbrenner 9 und das Schweißdrahtende 12b werden auch hier zusätzlich um den Winkel β quer zur Verfahrrichtung geneigt. Mögliche Winkelbereich für den Winkel β können wie beim zuvor beschriebenen Ausführungsbeispiel der Erfindung gewählt sein.

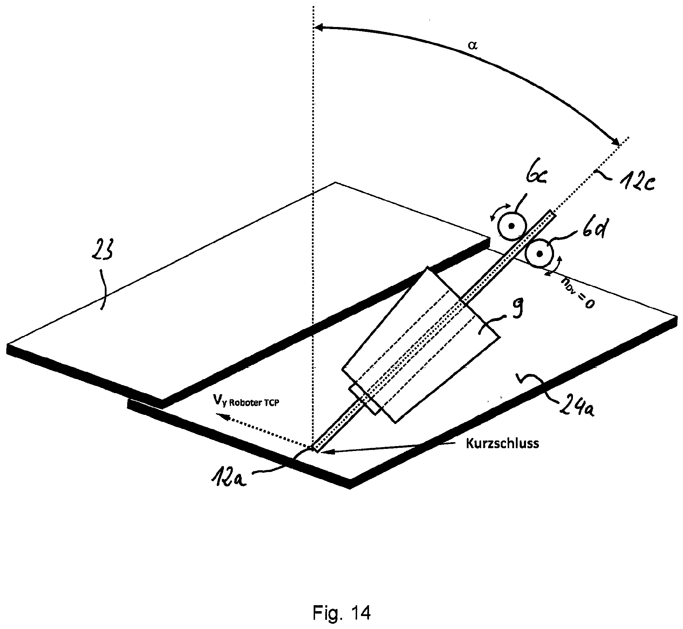

Um mit dem Dektektionsverfahrschritt nun eine IST-Stelle der Fügelinie 21 zu ermitteln, sollte der Schweißdraht 12 hinsichtlich axialer Verschiebbarkeit fixiert bzw geklemmt sein, insbesondere durch Klemmung in der Drahtvorschubeinrichtung, insbesondere des vorderen Drahtvorschubs 6b, mittels des Antriebsmotors und der von ihr angetriebenen Vorschubrolle. Hierzu kann der Antriebsmotor kurzgeschlossen sein, so daß die Motorwelle und das angetriebene Vorschubrad 6c weder von selbst aktiv noch durch eine auf den Draht wirkende äussere Kraft passiv dreht. Ausserdem kann die Kurzschlußerkennung eingeschaltet werden, mit welcher ein Kurzschluß zwischen dem Schweißdraht 12, an dem eine Spannung anliegt, und dem Werkstück detektiert werden kann. Die Schweißdrahtspitze 12a befindet sich hierdurch sicher im TCP. Mit diesem geklemmten Schweißdraht 12 verfährt der Roboter 20 den Lichtbogenschweißbrenner 9 in Richtung auf eine Stelle der Oberfläche 24a des Unterblechs 24 zu, an welcher der Schweißdraht 12 die Oberfläche 24a erstmals berühren soll. Dabei kann eine geringe Bewegungsgeschwindigkeit gewählt werden, damit die Zustellbewegung sofort bei Kontakt des Schweißdrahts 12 gestoppt werden kann (Fig. 14).

Unmittelbar bei Erkennung des Kurzschlusses aufgrund eines Kontakts der Drahtspitze 12a mit dem Werkstück wird dann auch die Zustellbewegung des Roboters 20 durch die Steuerung gestoppt. Die Koordinaten, bezogen auf den TCP, dieser Kontaktstelle werden im Speicher der Steuerung abgelegt und gespeichert. Sie können in die nachfolgenden Berechnungen des IST-Verlaufs der Fügelinie 21 und des Schweißwegs einfließen.

Nun wird in einer ersten Variante dieses Ausführungsbeispiels der Schweißdraht 12 um wenige Inkremente des Elektromotors in Rückzugsrichtung des Schweißdrahts 12 gedreht, so daß die Schweißdrahtspitze 12a keinen Kontakt mit dem unteren Fügebauteil, hier Unterblech 24, mehr hat. Hierdurch ist der Kurzschluß aufgehoben.

Alternativ hierzu kann auch der Schweißbrenner 12 durch den Mehrachsenroboter angehoben werden. Der Lichtbogenschweißbrenner 9 wird nun mit der geringfügig vom Unterblech 24 abgehobener Drahtspitze in Richtung der angenommenen Fügelinie 21 bewegt. Die Drahtspitze 12a bewegt sich dabei voraus, also in einer "stechenden" Ausrichtung des Schweißdrahtendes 12b während der Vorschubbewegung (Fig. 14). Bei dieser Variante kann somit der bei einer stechenden oder auch drückenden Bewegung der Schweißdrahtspitze 12a über eine Oberfläche mögliche Stick-Slip Effekt, der zu einem unkontrollierten Aufheben und wieder Erzeugen eines Kurzschlusses zwischen der Werkstückoberfläche und dem Schweißdraht 12 führen könnte, sicher vermieden werden. Ebenso kann ein mögliches axiales Bewegen des Schweißdrahts 12, verhindert werden, was ebenfalls aufgrund des Stick-Slip Effekts möglich ist. Dieser "Haft-Gleit-Effekt" ist an sich in der Lage, die Funktionssicherheit des Verfahrens bei stechender Führung zu gefährden.

Die Bewegungsrichtung des Schweißbrenners 9 mit seinem Schweißdraht 12 sollte hierbei, bezogen auf die Schweißdrahtspitze 12a, parallel und mit konstant geringem Abstand zum angenommenen Verlauf der Oberfläche 24a des Unterblechs 24 in Richtung hin zur angenommenen Fügelinie 21 ausgerichtet sein. Der Schweißdraht 12 kommt erst dann wieder mit einem der Werkstücke in Kontakt und ein zu detektierender Kurzschluß entsteht dabei, wenn die Schweißdrahtspitze 12a auf die Fügelinie 21 stößt, hier eine Stirnseite 23b des Oberblechs 23. Das Kurzschlußsignal kann zur Detektierung des Erreichens einer Stelle der Fügelinie 21 durch die Schweißdrahtspitze 12a genutzt werden. Eine solche Detektierung führt einerseits dazu, daß die Steuerung die Vorschubbewegung des Roboters sofort stoppt. Andererseits werden dadurch auch die Koordinaten, bezogen auf den TCP, der Schweißdrahtspitze 12a in dieser Kontaktposition im Speicher der Steuerung zur nachfolgenden Berechnung abgespeichert.

Nachfolgend kann der Schweißdraht 12 weiterhin auf die gleiche wie zuvor beschriebene Weise zwischen den Rollen 6c, 6d geklemmt sein. Außerdem kann der Roboter 20 den Lichtbogenschweißbrenner 9 von der Fügelinie 21 kollisionsfrei wegführen und dabei den Abstand zu den Werkstücken vergrößern, beispielsweise indem der Lichtbogenschweißbrenner 9 senkrecht von der Oberfläche 24a des Unterblechs 24 abgehoben wird.

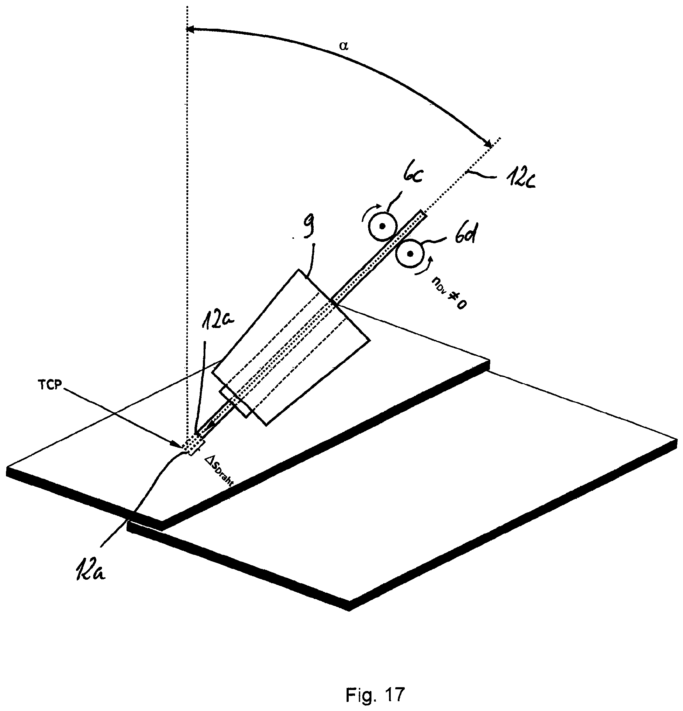

Schließlich kann der Schweißdraht 12 wieder um die Länge in Vorschubrichtung nach vorne bewegt werden, die er zuvor durch die Kantensuche zurückbewegt wurde. Die Schweißdrahtspitze 12a befindet sich dadurch wieder im TCP (Fig. 17). Um exakt die gleiche Vorschublänge zu erreichen, die der Rückschublänge entspricht, kann der Elektromotor des vorderen Drahtvorschubs 6b exakt die Anzahl an Inkrementen in Vorschubrichtung und in einer angetriebenen Vorschubbewegung bewegt werden, die er zuvor in umgekehrter Richtung gedreht wurde.

Alternativ zu einem zuerst Rückzug und am Ende des jeweiligen Verfahrdetektionsschritts 30, 31, 32 wieder Vorschub des Schweißdrahts kann bei diesem Typ von Verfahrdetektionsschritten der Lichtbogenschweißbrenner 9 nach einem Erstkontakt der Schweißdrahtspitze 12a mit der jeweiligen Oberfläche eines Werkstücks auch um einen vorbestimmten geringen Betrag von der Oberfläche 24a abgehoben werden. Der Verfahrweg des Schweißdrahts mit der Schweißdrahtspitze voraus, folgt dann kontaktlos zur Oberfläche 24a des - in diesem Fall - Unterblechs 24 unter Einhaltung dieses Abstands.

Es kann nun eine zweite Stelle des Ist-Verlaufs der Fügelinie ermittelt werden. Hierzu fährt der Schweißroboter 20 mit dem Lichtbogenschweißbrenner 9 eine weitere Stelle in der Nähe des Soll-Verlaufs der Fügelinie 21 an. Es folgt dann ein Ablauf wie bei der zuvor beschriebenen Ermittlung der ersten Stelle der Fügelinie im Zusammenhang mit den Fig. 13 bis 17. Die Bewegungsbahnen hierfür sind lediglich seitlich, in Richtung des SOLL-Verlaufs der Fügelinie 21, versetzt. Beim Auftreffen der Schweißdrahtspitze 12a auf die Fügekante 21 bzw. Stirnseite 12b entsteht wiederum ein Kontakt mit dem Oberblech, wodurch ein Kurzschluß ensteht, was als Detektionsergebnis zur Bestimmung der Koordinaten einer zweiten Stelle des IST-Verlaufs der Fügelinie 21 herangezogen wird. Mit den Koordinaten dieser beiden Stellen ist bereits ein IST-Verlauf der geradlinigen Fügelinie 21 berechenbar bzw eine Korrektur des SOLL-Verlaufs bestimmbar, welche den tatsächlichen Verlauf der Fügelinie wiedergibt. In einer bevorzugten Ausführungsform der Erfindung werden jedoch die Koordinaten von zumindest einer weiteren IST-Stelle der Fügelinie 21 bestimmt. Diese zumindest dritte Stelle des IST-Verlaufs der Fügelinie erhöht die Genauigkeit des aufgrund von detektierten Stellen ermittelten IST-Verlaufs der Fügelinie 21 und des zu einem nachfolgenden Zeitpunkt abzufahrenden Schweißverfahrwegs des Roboters 20 mit dem Lichtbogenschweißbrenner. Wie bei allen anderen erfindungsgemäßen Verfahren auch, können zur Bestimmung eines IST-Verlaufs einer Fügelinie 21 noch weitere, also insgesamt vier oder mehr, Stellen der jeweiligen Fügelinie 21 detektiert, deren Koordinaten bestimmt und aus allen ermittelten Koordinaten insgesamt der IST-Verlauf der jeweiligen Fügelinie 21 berechnet werden. Üblicherweise wird sich dabei die Genauigkeit der Übereinstimmung des auf diese Weise bestimmten Verlaufs mit dem tatsächlichen Verlauf der Fügelinie 21 mit steigender Anzahl an ermittelten Stellen der Fügelinie 21 erhöhen. Von Vorteil bei allen Verfahrdetektionsschritten kann dabei sein, wenn der jeweilige Verfahrweg zumindest in etwa senkrecht zum SOLL-Verlauf der Fügelinie 21, bezogen auf die Stelle, an welcher der Verfahrweg die Fügelinie 21 schneidet, verläuft.

Nachfolgend wird eine zweite Variante dieses Ausführungsbeispiels mit stechender bzw drückender Führung des Schweißdrahts 12 bei zwei überlappend angeordneten und miteinander zu verschweissenden Blechen erläutert. Hierbei werden im wesentlichen nur Unterschiede im Vergleich mit der zuvor erörterten ersten Variante der Fig. 13 bis 17 mit stechender bzw drückender Führung erläutert, ansonsten wird Bezug auf die erste Variante genommen. Nachdem das Schweißdrahtende 12b in einem Winkel α in Verfahrrichtung gegen eine Senkrechte durch den TCP und mit einem Winkel β quer zur Richtung des nachfolgenden Verfahrwegs ausgerichtet ist, wird der Lichtbogenschweißbrenner 12 in Richtung auf die Oberfläche des ersten Blechs 23 bzw Fügepartners abgesenkt. Sobald ein Kontakt zwischen dem Schweißdrahtende und dem Werkstück besteht, kann bei eingeschalteter Kurzschlußerkennung die Zustellbewegung des Roboters 20 sofort gestoppt werden. Nachfolgend wird die Schweißdrahtspitze 12b mit schräg gestelltem Endabschnitt 12b des Schweißdrahts 12 drückend und mit ständigem Kontakt über die Oberfläche 24a des ersten Werkstücks, hier eines Unterblechs 24, geführt. Die Einstellungen der Drahtvorschubeinrichtungen können hierbei jenen entsprechen, wie sie auch bei der zuvor erörterten Ausführungsform mit schleppender bzw ziehender Schweißdrahtspitze beschrieben sind. Der Schweißdraht 12 kann also zwischen den Antriebsrollen 6c, 6d der Drahtvorschubeinrichtung, hier des vorderen Drahtvorschubs 6b, geklemmt sein. Hierdurch kann ein zumindest weitestgehender ununterbrochener Kontakt der Schweißdrahtspitze 12a mit dem Oberblech auch bei Oberflächenungenauigkeiten erreicht werden. Außerdem kann dies auch dem "Stick-Slip"-Effekt entgegenwirken. Bei diesem Ausführungsbeispiel kann die Schweißdrahtspitze auf dem Oberblech ununterbrochen schleifend mit der Schweißdrahtspitze voraus in Richtung auf die Fügelinie zubewegt werden. Hierbei besteht konstant ein Kurzschluß zwischen der Schweißdrahtspitze und dem Oberblech. Gelangt die Drahtspitze dann an eine Stelle der Fügelinie, so verliert die Drahtspitze den Kontakt zum obenliegende Werkstück, hier dem Oberblech. Dieses Ereignis kann als Aufhebung des Kurzschlußes detektiert und als Erreichen der Fügelinie interpretiert werden. Aufgrund eines entsprechenden Detektionssignals stoppt die Steuerung die Bewegung des Roboters und speichert die Koordinaten der Kontaktstelle mit der Fügekante ab.

Nachfolgend kann der Schweißbrenner von den Werkstücken abgehoben und der Schweißbrenner zu einem anderen Startpunkt über dem Oberblech verfahren werden. Von hier aus kann dann ein zwar örtlich versetzter, aber im Verfahrensablauf bezüglich des ersten Zyklus zur Bestimmung einer ersten Stelle der Fügelinie identischer zweiter Zyklus folgen, mit dem durch eine drückende bzw stechende Führung der Schweißdrahtspitze über das Oberblech, bei ständigem Kontakt mit dem Oberblech, eine zweite Stelle der Fügekante detektiert wird. Nachfolgend kann dies mit wiederum einem örtlich versetzten, inhaltlich aber identischen dritten Verfahrenszyklus zur Bestimmung einer sich von den ersten beiden Stellen unterscheidenden dritten Stelle der Fügekante wiederholt werden. Wie bei allen anderen erfindungsgemäßen Ausführungsformen des Verfahrens auch, können auch hier je nach Genauigkeitsbedarf und angenommenem SOLL-Verlauf der Fügekante entweder keine weiteren oder beliebig viele Verfahrenszyklen zur Bestimmung weiterer Stellen der Fügekante folgen. Grundsätzlich ist die Ermittlung von lediglich einer Stelle der Fügekante erforderlich, um bereits eine Aussage zu einer Korrektur des der Steuerung bekannten SOLL-Verlaufs der Fügekante treffen zu können.

In einer weiteren bevorzugten Ausführungsform der Erfindung kann ein Verfahren auch zumindest einen Verfahrdetektionsschritt mit einer schleppenden Führung der Schweißdrahtspitze 12a und zumindest einen Verfahrdetektionsschritt mit einer drückenden Führung der Schweißdrahtspitze 12a aufweisen. Ebenso kann der Verfahrweg von zumindest einem Verfahrdetektionsschritt über das Oberblech 23 und ein Verfahrweg von zumindest einem Verfahrdetektionsschritt des gleichen Verfahrens über das Unterblech 24 erfolgen.

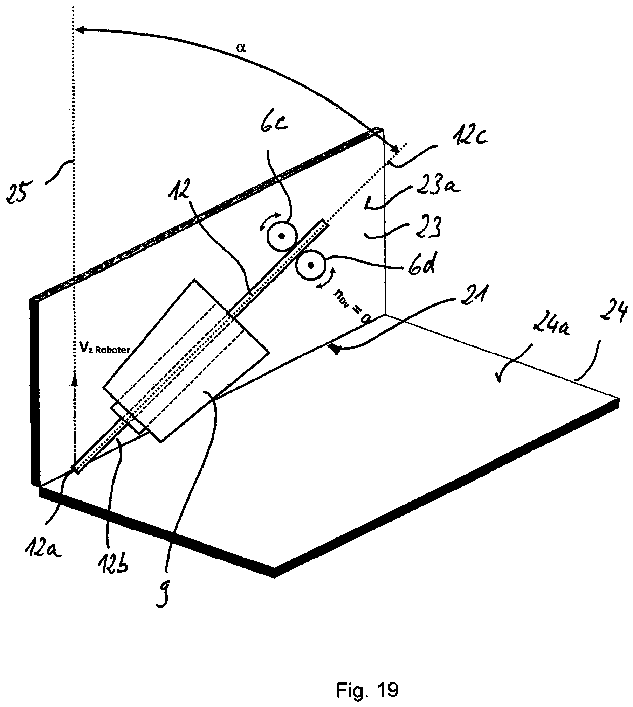

Mit bevorzugten Ausführungsformen der Erfindung können mit diesen auch eine Kehlnaht bzw Stellen der Kehlnaht detektiert werden, wie dies in den Fig. 19 und 20 dargestellt ist. Hierzu eignet sich insbesondere Ausführungsformen der Erfindung, bei denen in Bewegungsrichtung des Schweißbrenners, dieser mit der Schweißdrahtspitze 12a voraus geführt wird. Besonders geeignet sind somit Verfahrensformen, bei denen die Schweißdrahtspitze 12a stechend und mit entweder konstantem Kontakt oder konstantem Nicht-Kontakt über die Oberfläche des einen Fügepartners geführt wird, bis die Schweißdrahtspitze auf den anderen Fügepartner auftrifft und diesen kontaktiert. Das jeweilige Verfahren kann im Detail ablaufen, wie es im Zusammenhang mit zwei parallel aufeinander gelegten Blechen in den Figuren 13 bis 18 gezeigt und vorstehend beschrieben ist. Hinsichtlich einer Kehlnaht unterscheiden sich die dort gezeigten Verfahren lediglich dadurch, daß die Fügepartner nicht zwei zueinander parallel ausgerichtete Bauteile sondern ein mit seiner Oberfläche senkrecht oder in etwa senkrecht zur Oberfläche des anderen Bauteils ausgerichtetes Bauteil aufweist. Es wird deshalb für die erfindungsgemäß bevorzugt anzuwenden Verfahren für Kehlnähte auf die vorstehenden Ausführungen zu Verfahren mit stechend geführtem Schweißdraht Bezug genommen und ausdrücklich auch als Inhalt für die Bearbeitung von Kehlnähten erklärt.

### Bezugszeichenliste

| | | | |
|---|---|---|---|
| 1 | Lichtbogenschweißanlage | 18 | Kürzungswerkzeug |
| 2 | Werkstück | 20 | Schweißroboter |
| 2a | Oberfläche | 20a | Endmanipulator |
| 3 | Werkstück | 21 | Fügelinie/Fügekante |
| 4 | Schweißstromquelle | 23 | Oberblech |
| 5 | Schweißdrahtvorrat | 23a | Oberfläche |
| 6 | Drahtvorschubeinrichtung | 23b | Stirnseite |
| 6a | hinterer Drahtvorschub | 24 | Unterblech |
| 6b | vorderer Drahtvorschub | 24a | Oberfläche |
| 6c | angetriebene Rolle | 25 | Senkrechte |
| 6d | passive Rolle | 27 | Begrenzungskante |
| 7 | Schlauchpaket | 30 | erster Detektionsverfahrschritt |
| 8 | Schutzgasversorgung | 31 | zweiter Detektionsverfahrschritt |
| 9 | Lichtbogenschweißbrenner | 31a | Startstelle |
| 9a | Brennerhals | 31b | Endpunkt |
| 9a | Lichtbogenschweißbrennerende | 32 | dritter Detektionsverfahrschritt |
| 10 | Polkabel | 32a | Startpunkt |
| 11 | Polkabel | 33 | |
| 12 | Schweißdraht | | |
| 12a | Schweißdrahtspitze | | |
| 12b | Schweißdrahtende | | |
| 12c | Schweißdrahtlängsachse | | |
| 15 | Schweißstromquellensteuerung | | |
| 16 | Bedieneinrichtung | | |
| 17 | Reinigungsstation | | |

## Patentansprüche

1. Verfahren zum Bestimmen eines von einem Roboter abzufahrenden Schweißwegs für einen nachfolgenden Lichtbogenschweißvorgang mittels einer Lichtbogenschweißanlage, bei dem zwischen zumindest zwei Werkstücken entlang einer Fügelinie zwischen den zumindest zwei Werkstücken eine Schweißnaht erzeugt werden soll, wobei ein zur nachfolgenden Ausführung des Lichtbogenschweißvorgangs vorgesehener und vom Roboter geführter einen Schweißdraht umfassender Lichtbogenschweißbrenner in zumindest einem Detektionsverfahrschritt automatisiert über die Oberfläche von zumindest einem der Werkstücke geführt wird, um Informationen über einen Ist-Verlauf der Fügelinie zu ermitteln,
**dadurch gekennzeichnet, dass**:
der Roboter ein Mehrachsenroboter ist;
und
der Lichtbogenschweißbrenner mit seinem Schweißdraht im zumindest einen Detektionsverfahrschritt zunächst mit der Schweißdrahtspitze die Oberfläche des einen Werkstücks an einer Ausgangsstelle kontaktiert, nachfolgend von der Ausgangsstelle bis zur Fügelinie für die vorgesehenen Schweißnaht zumindest im wesentlichen nicht-parallel zu einem Soll-Verlauf der Fügelinie mit durchgehend gleichen Kontaktverhältnissen zwischen der Schweißdrahtspitze und der Oberfläche des einen Werkstücks von einem Mehrachsenroboter über die Oberfläche des jeweiligen Werkstücks geführt wird, um hierbei durch Detektion einer Änderung der Kontaktverhältnisse zwischen der Schweißdrahtspitze und dem zumindest einen Werkstück auf eine Stelle der Fügelinie zu schließen.

2. Verfahren nach Anspruch 1, **dadurch gekennzeichnet, daß** der Schweißdraht im zumindest einen Detektionsverfahrschritt nach dem Kontakt der Schweißdrahtspitze mit der Oberfläche von der Ausgangsstelle bis zur Fügelinie zumindest im wesentlichen konstant und mit ununterbrochen vorhandenen Kontakt zwischen dem Schweißdraht und der Oberfläche des Werkstücks zumindest im wesentlichen nicht-parallel zu einem Soll-Verlauf der Fügelinie geführt wird, um durch eine aufgrund eines Kontaktverlusts des Schweißdrahts mit dem zumindest einen Werkstück eintretende Änderung der Kontaktverhältnisse auf Koordinaten der Stelle des Ist-Verlaufs der Fügelinie zu schließen.

3. Verfahren nach Anspruch 1 oder 2, **dadurch gekennzeichnet, daß** der Schweißdraht im zumindest einen Detektionsverfahrschritt nach dem Kontakt der Schweißdrahtspitze mit der Oberfläche an der Ausgangsstelle des einen Werkstücks von der Oberfläche abgehoben wird, dann mit Abstand, insbesondere mit geringem Abstand, zur Oberfläche des Werkstücks bis zur Fügelinie zumindest im wesentlichen konstant mit ununterbrochen nicht vorhandenem Kontakt zwischen dem Schweißdraht und der Oberfläche des Werkstücks zumindest im wesentlichen nicht-parallel zu einem Soll-Verlauf der Fügelinie geführt wird, um durch eine aufgrund eines eintretenden Kontakts der Schweißdrahtspitze mit einem der Werkstücke auf Koordinaten der Stelle des Ist-Verlaufs der Fügelinie zu schließen.

4. Verfahren nach einem der vorhergehenden Ansprüche, **dadurch gekennzeichnet, daß** unter Einsatz eines in einer Steuerung des Mehrachsenroboters hinterlegten und von der Steuerung ausgeführten Computerprogrammprodukts der Kontakt der Schweißdrahtspitze mit der Oberfläche des Werkstücks an der jeweiligen Ausgangsstelle detektiert wird und nachfolgend die Steuerung bei der Bewegung des Schweißbrenners mit Richtung auf die Fügelinie auf eine detektierte Änderung des entweder durchgehend vorhandenen oder durchgehend nicht vorhandenen Kontakts der Schweißdrahtspitze mit dem Werkstück wartet, um beim Zeitpunkt des Eintritts der Kontaktänderung die Koordinaten der zu diesem Zeitpunkt eingenommenen Position der Schweißdrahtspitze als Stelle der Fügelinie abzuspeichern.

5. Verfahren nach Anspruch 4, **dadurch gekennzeichnet, daß** der Verfahrweg der Schweißdrahtspitze zur Detektion der Kontaktänderung zumindest näherungsweise einem Verlauf der Oberfläche des einen Werkstücks folgt und eine Kontaktänderung entweder aufgrund eines Verlassens der Oberfläche des Werkstücks durch die Schweißdrahtspitze oder aufgrund eines Auftreffens der Schweißdrahtspitze auf ein anderes Werkstück detektiert wird.

6. Verfahren nach einem der vorhergehenden Ansprüche, **dadurch gekennzeichnet, daß** der Schweißdraht bei der Ausführung des Verfahrwegs über die Oberfläche des zumindest einen Werkstücks, in unveränderter relativer Position zum Lichtbogenschweißbrenner verbleibt.

7. Verfahren nach einem der vorhergehenden Ansprüche, **dadurch gekennzeichnet, daß** beim Führen der Schweißdrahtspitze über die Oberfläche des Werkstücks hin zur Fügelinie ein aus dem Lichtbogenschweißbrenner herausragendes Endstück des Schweißdrahts bezüglich einer Senkrechten zur Oberfläche des Werkstücks um einen Winkel aus einem Bereich 0° 〈 α 〈 75°, bevorzugt aus einem Bereich 20° 〈 α 〈 50°, geneigt ist und die Neigung entweder in die vorgesehene Bewegungsrichtung oder entgegen der vorgesehen Bewegungsrichtung des Schweißdrahts bei dessen Verfahrbewegung über die Oberfläche des Werkstücks vorgenommen wird.

8. Verfahren nach einem der vorhergehenden Ansprüche, **dadurch gekennzeichnet, daß** beim Führen der Schweißdrahtspitze über die Oberfläche des Werkstücks hin zur Fügelinie ein aus dem Lichtbogenschweißbrenner herausragendes Endstück des Schweißdrahts bezüglich einer Senkrechten zur Oberfläche des Werkstücks sowie in eine Richtung zumindest im wesentlichen quer zur vorgesehenen Verfahrichtung, um einen Winkel β aus einem Bereich 0° 〈 β 〈 50°, bevorzugt aus einem Bereich 20° β 〈 40°, geneigt ist.

9. Verfahren nach einem der vorhergehenden Ansprüche, **dadurch gekennzeichnet, daß** zur Ermittlung von Informationen eines Verlaufs der Fügelinie des vorgesehenen Schweißwegs zumindest zwei unterschiedliche Detektionsverfahrschritte durchgeführt werden, deren Wege jeweils nicht-parallel zum Soll-Verlauf des Schweißwegs verlaufen.

10. Verfahren nach einem der vorhergehenden Ansprüche, **dadurch gekennzeichnet, daß** zumindest während des Abfahrens des zumindest einen Verfahrwegs des zumindest einen Detektionsverfahrschritts über die Oberfläche des Werkstücks der Schweißdraht in der Drahtvorschubeinrichtung in seiner axialen Richtung unbeweglich geklemmt wird.

11. Verfahren nach Anspruch 10, **dadurch gekennzeichnet, daß** zur Klemmung in einem Elektromotor einer Drahtvorschubeinrichtung der Lichtbogenschweißanlage ein Kurzschluß der Windungen erzeugt wird.

12. Verfahren nach einem der vorhergehenden Ansprüche, **dadurch gekennzeichnet, daß** die Steuerung der Lichtbogenschweißanlage einen Motor und/oder einen Tacho der Drahtvorschubeinrichtung während des Abfahrens des zumindest einen Wegs des Detektionsverfahrschritts überwacht, um eine Änderung des Motorstroms zu detektieren und bei Überschreiten eines Schwellwerts der Änderung des Motorstroms auf eine Stelle Ist-Verlaufs der Fügelinie zu schließen, wobei die Steuerung diese ermittelte Koordinaten zur Korrektur des Verlaufs des nachfolgend auszuführenden Schweißwegs abspeichert und verwendet.

13. Verfahren nach einem der vorhergehenden Ansprüche, **dadurch gekennzeichnet, daß** am Schweißdraht eine Spannung anliegt, wodurch während des Abfahrens des Wegs des zumindest einen Detektionsverfahrschritts ein Kurzschluß zwischen dem Schweißdraht und dem Werkstück besteht.

14. Verfahren nach einem der vorhergehenden Ansprüche, **gekennzeichnet durch** einen Teach-In Schritt, bei dem die sich in einer bestimmten Position befindende Schweißdrahtspitze als Koordinaten-Referenzstelle definiert wird, insbesondere als Tool-Center-Point (TCP), auf den sich nachfolgende Koordinatenbestimmungen beziehen.

15. Verfahren nach einem der vorhergehenden Ansprüche, **gekennzeichnet durch** einen Teach-In Schritt, der vor der Ausführung eines Detektionsverfahrschritts ausgeführt und ein Kürzen des aus dem Lichtbogenschweißbrenner herausragenden Drahtendes umfaßt, wobei ein hierbei vorgesehenes Kürzungswerkzeug sich relativ zum Schweißdraht an einer Referenzstelle des Schweißbrenners, insbesondere einem Tool-Center-Point (TCP) befindet.

16. Verfahren nach Anspruch 15, **dadurch gekennzeichnet, daß** nach dem Kürzen des Schweißdrahts mit dessen Drahtende der zumindest eine Weg des zumindest einen vorgesehenen Detektionsverfahrschritts mit konstant eingehaltenen Kontaktverhältnisse der Drahtspitze über das zumindest einen Werkstück manuell oder gesteuert geführt und dabei die Koordinaten des vorgesehenen Wegs des Detektionsverfahrschritts in der Steuerung für ein nachfolgendes automatisiertes Abfahren des Wegs abgespeichert werden.

17. Verfahren nach Anspruch 16, **dadurch gekennzeichnet, daß** nach dem Kürzen des Schweißdrahts mehrere nicht-parallele Wege mehrerer Detektionsverfahrschritte mit jeweils konstant eingehaltenen Kontaktverhältnissen der Drahtspitze mit dem zumindest einem Werkstück über das zumindest eine Werkstück manuell oder gesteuert geführt und dabei die Koordinaten des vorgesehenen Wegs des Detektionsverfahrschritts in der Steuerung für ein nachfolgendes automatisiertes Abfahren des Wegs abgespeichert werden.

18. Verfahren nach einem der vorhergehenden Ansprüche, **dadurch gekennzeichnet, daß** nach Ausführung von zumindest zwei Detektionsverfahrschritten von einer Steuerung, ein IST-Verlauf der Fügelinie bestimmt wird, von der Steuerung auf Grundlage des Verlaufs der Fügelinie ein Schweißweg bestimmt wird und dieser Schweißweg automatisiert von dem mittels des Mehrachsenroboters geführten Lichtbogenschweißbrenner ausgeführt wird.

## Claims

1. A method for determining a welding path to be traveled by a robot for a subsequent arc welding operation by means of an arc welding system, in which a weld seam is to be produced between at least two workpieces along a joining line between the at least two workpieces, wherein an arc welding torch comprising a welding wire, intended for subsequent execution of the arc welding operation and guided by the robot, is automatically guided over the surface of at least one of the workpieces in at least one detection travel step in order to determine information about an actual course of the joining line,
**characterized in that**:
the robot is a multi-axis robot; and
in the at least one detection travel step, the arc welding torch with its welding wire first contacts, with the welding-wire tip, the surface of the one workpiece at a starting point and subsequently is guided from the starting point to the joining line for the intended weld seam, at least substantially non-parallel to a target course of the joining line, with continuously identical contact conditions between the welding-wire tip and the surface of the one workpiece, by a multi-axis robot over the surface of the respective workpiece, in order thereby to infer a point of the joining line by detecting a change in the contact conditions between the welding-wire tip and the at least one workpiece.

2. The method according to claim 1, **characterized in that**, in the at least one detection travel step, after contact of the welding-wire tip with the surface, the welding wire is guided from the starting point to the joining line at least substantially constantly and with uninterrupted existing contact between the welding wire and the surface of the workpiece, at least substantially non-parallel to a target course of the joining line, in order to infer coordinates of the point of the actual course of the joining line by means of a change in the contact conditions occurring due to a loss of contact of the welding wire with the at least one workpiece.

3. The method according to claim 1 or 2, **characterized in that**, in the at least one detection travel step, after contact of the welding-wire tip with the surface at the starting point of the one workpiece, the welding wire is lifted off from the surface and then is guided at a distance, in particular at a small distance, from the surface of the workpiece to the joining line, at least substantially constantly and with uninterrupted non-existing contact between the welding wire and the surface of the workpiece, at least substantially non-parallel to a target course of the joining line, in order to infer coordinates of the point of the actual course of the joining line by means of a change in the contact conditions occurring due to contact of the welding-wire tip with one of the workpieces.

4. The method according to any one of the preceding claims, **characterized in that**, using a computer program product stored in a controller of the multi-axis robot and executed by the controller, the contact of the welding-wire tip with the surface of the workpiece at the respective starting point is detected and, subsequently, during movement of the welding torch in the direction toward the joining line, the controller waits for a detected change of the contact of the welding-wire tip with the workpiece, the contact being either continuously present or continuously not present, in order, at the time at which the contact change occurs, to store the coordinates of the position assumed by the welding-wire tip at that time as a point of the joining line.

5. The method according to claim 4, **characterized in that** the travel path of the welding-wire tip for detecting the contact change follows, at least approximately, a course of the surface of the one workpiece, and a contact change is detected either due to the welding-wire tip leaving the surface of the workpiece or due to the welding-wire tip striking another workpiece.

6. The method according to any one of the preceding claims, **characterized in that** the welding wire remains in an unchanged relative position with respect to the arc welding torch during execution of the travel path over the surface of the at least one workpiece.

7. The method according to any one of the preceding claims, **characterized in that**, when guiding the welding-wire tip over the surface of the workpiece toward the joining line, an end piece of the welding wire protruding from the arc welding torch is inclined, with respect to a perpendicular to the surface of the workpiece, by an angle within a range of 0° 〈 α 〈 75°, preferably within a range of 20° 〈 α 〈 50°, and the inclination is made either in the intended direction of movement or opposite the intended direction of movement of the welding wire during its travel movement over the surface of the workpiece.

8. The method according to any one of the preceding claims, **characterized in that**, when guiding the welding-wire tip over the surface of the workpiece toward the joining line, an end piece of the welding wire protruding from the arc welding torch is inclined, with respect to a perpendicular to the surface of the workpiece and in a direction at least substantially transverse to the intended travel direction, by an angle within a range of 0° 〈 β 〈 50°, preferably within a range of 20° β 〈 40°.

9. The method according to any one of the preceding claims, **characterized in that**, to determine information about a course of the joining line of the intended welding path, at least two different detection travel steps are carried out, the paths of which each extend non-parallel to the target course of the welding path.

10. The method according to any one of the preceding claims, **characterized in that**, at least during travel along the at least one travel path of the at least one detection travel step over the surface of the workpiece, the welding wire is clamped in the wire feed device so as to be immovable in its axial direction.

11. The method according to claim 10, **characterized in that**, for clamping, a short circuit of the windings is produced in an electric motor of a wire feed device of the arc welding system.

12. The method according to any one of the preceding claims, **characterized in that** the controller of the arc welding system monitors a motor and/or a tachometer of the wire feed device during travel along the at least one path of the detection travel step in order to detect a change in the motor current and, when a threshold value of the change in the motor current is exceeded, to infer a point of the actual course of the joining line, wherein the controller stores these determined coordinates and uses them for correcting the course of the welding path to be subsequently executed.

13. The method according to any one of the preceding claims, **characterized in that** a voltage is applied to the welding wire, whereby, during travel along the path of the at least one detection travel step, a short circuit exists between the welding wire and the workpiece.

14. The method according to any one of the preceding claims, **characterized by** a teach-in step in which the welding-wire tip located in a particular position is defined as a coordinate reference point, in particular as a tool center point (TCP), to which subsequent coordinate determinations relate.

15. The method according to any one of the preceding claims, **characterized by** a teach-in step that is carried out before execution of a detection travel step and comprises shortening the wire end protruding from the arc welding torch, wherein a shortening tool provided for this purpose is located relative to the welding wire at a reference point of the welding torch, in particular a tool center point (TCP).

16. The method according to claim 15, **characterized in that**, after shortening the welding wire at its wire end, the at least one path of the at least one intended detection travel step is guided manually or in a controlled manner over the at least one workpiece with constantly maintained contact conditions of the wire tip, and the coordinates of the intended path of the detection travel step are thereby stored in the controller for subsequent automated travel along the path.

17. The method according to claim 16, **characterized in that**, after shortening the welding wire, several non-parallel paths of several detection travel steps, each with constantly maintained contact conditions of the wire tip with the at least one workpiece, are guided manually or in a controlled manner over the at least one workpiece, and the coordinates of the intended paths of the detection travel steps are thereby stored in the controller for subsequent automated travel along the paths.

18. The method according to any one of the preceding claims, **characterized in that**, after execution of at least two detection travel steps, an actual course of the joining line is determined by a controller, a welding path is determined by the controller on the basis of the course of the joining line, and this welding path is automatically executed by the arc welding torch guided by means of the multi-axis robot.

## Revendications

1. Procédé pour déterminer un chemin de soudage que doit suivre un robot pour une opération de soudage à l'arc ultérieure au moyen d'une installation de soudage à l'arc, dans lequel un cordon de soudure doit être réalisé entre au moins deux pièces le long d'une ligne de joint entre lesdites au moins deux pièces, un chalumeau de soudage à l'arc, prévu pour l'exécution ultérieure de l'opération de soudage à l'arc, guidé par le robot et comprenant un fil de soudage, étant guidé de manière automatisée, dans au moins une étape de déplacement de détection, sur la surface d'au moins l'une des pièces, afin de déterminer des informations sur le tracé réel de la ligne de joint,
**caractérisé en ce que**
le robot est un robot multi-axes ; et **en ce que**
dans ladite au moins une étape de déplacement de détection, le chalumeau de soudage à l'arc doté de son fil de soudage entre d'abord en contact par la pointe de fil de soudage avec la surface de ladite pièce à une position de départ, puis est guidé par un robot multi-axes sur la surface de la pièce concernée, de la position de départ jusqu'à la ligne de joint pour le cordon de soudure prévu, de manière au moins sensiblement non parallèle à un tracé de consigne de la ligne de joint, avec des conditions de contact constantes entre la pointe de fil de soudage et la surface de ladite pièce, afin de déduire ainsi une position de la ligne de joint par détection d'un changement des conditions de contact entre la pointe de fil de soudage et ladite au moins une pièce.

2. Procédé selon la revendication 1, **caractérisé en ce que**, dans ladite au moins une étape de déplacement de détection, après le contact de la pointe de fil de soudage avec la surface, le fil de soudage est guidé de la position de départ jusqu'à la ligne de joint de manière au moins sensiblement constante et avec un contact ininterrompu entre le fil de soudage et la surface de la pièce, de manière au moins sensiblement non-parallèle à un tracé de consigne de la ligne de joint, afin de déduire, d'un changement des conditions de contact dû à une perte de contact du fil de soudage avec ladite au moins une pièce, les coordonnées de la position du tracé réel de la ligne de joint.

3. Procédé selon la revendication 1 ou 2, **caractérisé en ce que**, dans ladite au moins une étape de déplacement de détection, après le contact de la pointe de fil de soudage avec la surface à la position de départ de ladite pièce, le fil de soudage est soulevé de la surface, puis guidé à distance, en particulier à faible distance, de la surface de la pièce jusqu'à la ligne de joint, de manière au moins sensiblement constante et avec une absence de contact ininterrompue entre le fil de soudage et la surface de la pièce, et de manière au moins sensiblement non-parallèle à un tracé de consigne de la ligne de joint, afin de déduire, à partir d'un contact survenant entre la pointe de fil de soudage et l'une des pièces, les coordonnées de la position du tracé réel de la ligne de joint.

4. Procédé selon l'une quelconque des revendications précédentes, **caractérisé en ce qu'**à l'aide d'un programme informatique enregistré dans une commande du robot multi-axes et exécuté par la commande, le contact de la pointe de fil de soudage avec la surface de la pièce est détecté à la position de départ respective, et **en ce que**, par la suite, lors du déplacement du chalumeau de soudage en direction de la ligne de joint, la commande attend un changement détecté du contact de la pointe de fil de soudage, soit présent de manière continue, soit absent de manière continue avec la pièce, afin d'enregistrer, au moment de la survenue du changement de contact, les coordonnées de la position occupée à cet instant par la pointe de fil de soudage comme position de la ligne de joint.

5. Procédé selon la revendication 4, **caractérisé en ce que** le chemin de déplacement de la pointe de fil de soudage pour la détection du changement de contact suit, au moins approximativement, un tracé de la surface de ladite pièce, et **en ce qu'**un changement de contact est détecté soit en raison du fait que la pointe de fil de soudage quitte la surface de la pièce, soit en raison du fait que la pointe de fil de soudage atteint une autre pièce.

6. Procédé selon l'une quelconque des revendications précédentes, **caractérisé en ce que**, lors de l'exécution du chemin de déplacement sur la surface de ladite au moins une pièce, le fil de soudage reste dans une position relative inchangée par rapport au chalumeau de soudage à l'arc.

7. Procédé selon l'une quelconque des revendications précédentes, **caractérisé en ce que**, lors du guidage de la pointe de fil de soudage sur la surface de la pièce vers la ligne de joint, une extrémité du fil de soudage dépassant du chalumeau de soudage à l'arc est inclinée par rapport à une perpendiculaire à la surface de la pièce d'un angle compris dans une plage de 0° < α < 75°, de préférence dans une plage de 20° < α < 50°, et que cette inclinaison est effectuée soit dans la direction de déplacement prévue, soit dans la direction opposée à la direction de déplacement prévue du fil de soudage lors de son déplacement sur la surface de la pièce.

8. Procédé selon l'une quelconque des revendications précédentes, **caractérisé en ce que**, lors du guidage de la pointe de fil de soudage sur la surface de la pièce vers la ligne de joint, une extrémité du fil de soudage dépassant du chalumeau de soudage à l'arc est inclinée par rapport à une perpendiculaire à la surface de la pièce ainsi que dans une direction au moins sensiblement transversale à la direction de déplacement prévue d'un angle β compris dans une plage de 0° < β < 50°, de préférence dans une plage de 20° β < 40°.

9. Procédé selon l'une quelconque des revendications précédentes, **caractérisé en ce que**, pour déterminer des informations relatives à un tracé de la ligne de joint du chemin de soudage prévu, au moins deux étapes de déplacement de détection différentes sont effectuées, dont les trajectoires sont respectivement non parallèles au tracé de consigne du chemin de soudage.

10. Procédé selon l'une quelconque des revendications précédentes, **caractérisé en ce que**, au moins pendant le parcours dudit au moins un chemin de déplacement de ladite au moins une étape de déplacement de détection sur la surface de la pièce, le fil de soudage est serré de manière immobile dans le dispositif d'avancement de fil dans sa direction axiale.

11. Procédé selon la revendication 10, **caractérisé en ce que**, pour le serrage, un court-circuit des spires est généré dans un moteur électrique d'un dispositif d'avancement de fil de l'installation de soudage à l'arc.

12. Procédé selon l'une quelconque des revendications précédentes, **caractérisé en ce que** la commande de l'installation de soudage à l'arc surveille un moteur et/ou un tachymètre du dispositif d'avancement de fil pendant le parcours dudit au moins un chemin de l'étape de déplacement de détection, afin de détecter un changement du courant de moteur et, en cas de dépassement d'une valeur seuil du changement du courant de moteur, de déduire une position du tracé réel de la ligne de joint, la commande enregistrant et utilisant ces coordonnées déterminées pour corriger le tracé du chemin de soudage à exécuter ensuite.

13. Procédé selon l'une quelconque des revendications précédentes, **caractérisé en ce qu'**une tension est appliquée au fil de soudage, ce qui provoque un court-circuit entre le fil de soudage et la pièce pendant le parcours du chemin de ladite au moins une étape de déplacement de détection.

14. Procédé selon l'une quelconque des revendications précédentes, **caractérisé par** une étape d'apprentissage (Teach-In) lors de laquelle la pointe de fil de soudage se trouvant dans une position déterminée est définie comme position de référence de coordonnées, en particulier comme point central de l'outil (Tool Center Point, TCP), auquel se rapportent les déterminations de coordonnées suivantes.

15. Procédé selon l'une quelconque des revendications précédentes, **caractérisé par** une étape d'apprentissage qui est exécutée avant l'exécution d'une étape de déplacement de détection et qui comprend un raccourcissement de l'extrémité de fil dépassant du chalumeau de soudage à l'arc, un outil de raccourcissement prévu à cet effet se trouvant, par rapport au fil de soudage, à une position de référence du chalumeau de soudage, en particulier un point central de l'outil (TCP).

16. Procédé selon la revendication 15, **caractérisé en ce qu'**après le raccourcissement du fil de soudage, l'extrémité de ce dernier est guidée manuellement ou de manière commandée sur ledit au moins un chemin de ladite au moins une étape de déplacement de détection prévue en maintenant constantes les conditions de contact de la pointe de fil sur ladite au moins une pièce, et ce faisant, les coordonnées du chemin prévu de l'étape de déplacement de détection sont enregistrées dans la commande en vue d'un parcours automatisé ultérieur de ce chemin.

17. Procédé selon la revendication 16, **caractérisé en ce qu'**après le raccourcissement du fil de soudage, plusieurs chemins non parallèles de plusieurs étapes de déplacement de détection, avec à chaque fois des conditions de contact constantes entre la pointe de fil et ladite au moins une pièce, sont effectués manuellement ou de manière commandée sur ladite au moins une pièce, et ce faisant, les coordonnées du chemin prévu de l'étape de déplacement de détection sont enregistrées dans la commande en vue d'un parcours automatisé ultérieur de ce chemin.

18. Procédé selon l'une quelconque des revendications précédentes, **caractérisé en ce qu'**après l'exécution d'au moins deux étapes de déplacement de détection par une commande, un tracé réel de la ligne de joint est déterminé, un chemin de soudage est déterminé par la commande sur la base du tracé de la ligne de joint, et ce chemin de soudage est exécuté de manière automatisée par le chalumeau de soudage à l'arc guidé au moyen du robot multi-axes.
